# EUROPÄISCHE PATENTANMELDUNG

(11) **EP 4 241 866 A2**
(43) Veröffentlichungstag der Anmeldung: **13.09.2023**
(21) Anmeldenummer: 23182819.5
(22) Anmeldetag: 20.09.2019
(51) Int. Cl.: B01D 29/35

(54) **VORRICHTUNG ZUM FILTERN EINES FLUIDES, INSBESONDERE BERNOULLI-FILTER-VORRICHTUNG**

(30) Priorität: 20.09.2018 DE 102018123151
(62) Teilanmeldung aus: 19863374.5
(71) Anmelder: Georg Schünemann GmbH, 28201 Bremen (DE)
(72) Erfinder: Linster, Wolfgang, 28201 Bremen (DE)
(74) Vertreter: Eisenführ Speiser

(57) **Zusammenfassung**

Die Erfindung betrifft eine Vorrichtung (1, 1') zum Filtern eines Fluides, insbesondere Bernoulli-Filter-Vorrichtung (1, 1'), welche umfassen: ein Gehäuse (3, 3'), eine Mehrzahl in dem Gehäuse (3, 3') angeordnete Filterelemente (55) zum Filtern des Fluides, einen Einlass (5) zum Einlassen des zu filternden Fluides in das Gehäuse (3, 3'), und einen Auslass (7) zum Abgeben des gefilterten Fluides von dem Gehäuse (3, 3'). Die Erfindung löst die zugrundeliegende Aufgabe dadurch, dass das Gehäuse (3, 3') eine Mehrzahl von Gehäusesegmenten (23) aufweist, welche mit benachbarten Gehäusesegmenten (23) verbindbar sind, und dass jeweils ein Filterelement (55) mindestens teilweise innerhalb eines Gehäusesegments (23) angeordnet ist, und dass die Gehäusesegmente (23) und Filterelemente (55) zusammen ein modular zusammengesetzeszusammengesetztes Filtermodul (9) bilden. Die Erfindung betrifft ferner Vorrichtungen der eingangs genannten Art, welche ferner umfassen: mindestens einen Gehäusedeckel (25) zum Verschließen des Gehäuses, mindestens eine Filter-Reinigungseinrichtung (11) zur Reinigung des Filterelements (55) von Rückständen des gefilterten Fluides, und mindestens ein mit dem Filterelement (55) fluidleitend verbundenes Rückspülsystem (13, 13'), zur Leitung und Abgabe der Rückstände des gefilterten Fluides. Die Erfindung löst die zugrundeliegende Aufgabe dadurch, dass die Filter-Reinigungseinrichtung (11) dem Gehäusedeckel (25) zugeordnet und insbesondere an diesem befestigt ist, und das Rückspülsystem (13, 13') dem Gehäuse (3, 3'), insbesondere Gehäusesegmenten (23) zugeordnet ist.

## Beschreibung

Die Erfindung betrifft eine Vorrichtung zum Filtern eines Fluides, insbesondere eine Bernoulli-Filter-Vorrichtung, umfassend ein Gehäuse, eine Mehrzahl in dem Gehäuse angeordnete Filterelemente zum Filtern des Fluides, einen Einlass zum Einlassen des zu filternden Fluides in das Gehäuse, und einen Auslass zum Abgeben des gefilterten Fluides von dem Gehäuse.

Filter-Vorrichtungen der eingangs genannten Art sind allgemein bekannt. Eine solche Filter-Vorrichtung weist in der Regel ein Gehäuse mit einem Einlass und einem Auslass und ein in dem Gehäuse angeordnetes Filterelement auf. Dabei ist das Filterelement in der Regel im Wesentlichen zylindrisch ausgebildet.

Zudem weisen solche gattungsgemäßen Filter-Vorrichtungen vorzugsweise ein Filter-Reinigungselement auf, welches entlang der Zentralachse des zylindrischen Filterelements in das Filterelement einführbar ist. Durch dieses axiale Einführen des Filter-Reinigungselements wird in einem Bereich einer inneren Oberfläche des Filterelements eine Strömungsgeschwindigkeit aufgrund der Querschnittsverengung erhöht, wodurch im Filterelement anhaftende Stoffe abgespült und mittels Rückspülrohren abgeleitet werden. Die Reinigung eines solchen Filterelements erfolgt also in der Regel berührungslos durch eine Strömungsgeschwindigkeitserhöhung. Solche Filter-Vorrichtungen werden auch als Bernoulli-Filter bezeichnet.

DE 10 2011 007 003 A1 sowie DE 10 2009 012 444 A1 offenbaren jeweils eine Filter-Vorrichtung zum Filtern von Flüssigkeiten sowie ein Verfahren zum Filtern von Flüssigkeiten. DE 10 2005 055 555 A1 offenbart eine Filter-Vorrichtung sowie eine Vorrichtung und ein Verfahren zum Abtöten von in einem Fluid enthaltenen Lebewesen.

Die Baugröße solcher Filter-Vorrichtungen ist dabei maßgeblich für die Größe des zu filternden Volumenstroms der Flüssigkeit. Der Durchsatz an zu filternder Flüssigkeit ist somit aufgrund von Baugrößenrestriktionen beschränkt.

Baugrößenrestriktionen sind jedoch aus ökonomischer Sicht sinnvoll, da die Fertigungs- und Transportkosten sonst unverhältnismäßig ansteigen würden. Die Transport- und Werkzeugkosten steigen sowohl bei Gehäusen aus beispielsweise glasfaserverstärktem Kunststoff, welche häufig in sogenannten Autoklaven ausgehärtet werden müssen, als auch bei Gehäusen, welche im Guss hergestellt werden, sowie insbesondere beim Transport schwerer und sperriger Stahl oder Gusskonstruktionen.

Zur Wartung und Reinigung der Filter und Filter-Reinigungselemente müssen zumeist die Gehäuse geöffnet und Rohrleitungen, bzw. die Rückspülrohre demontiert oder abgesperrt werden, sodass der Betrieb vollständig eingestellt werden muss. Diese Arbeiten zur Demontage sind zumeist sehr zeitaufwendig. Die daraus resultierenden Ausfallzeiten wirken sich negativ auf die Durchsatzmenge der zu filternden Flüssigkeit aus.

Derartige Filter-Vorrichtungen, insbesondere Bernoulli-Filter, werden in einer Vielzahl von industriellen Anwendungen beispielsweise in der petrochemischen oder pharmazeutischen Industrie, der Energiewirtschaft oder auch auf Schiffen eingesetzt. Es ist daher von besonderem Interesse den Durchsatz an zu filternder Flüssigkeit zu maximieren. Sogenannte Multi-Bernoulli-Filter vereinen zu diesem Zweck eine Mehrzahl von Filterelementen in einem gemeinsamen Gehäuse mit einem an das Gehäuse angeschlossenen Einlass und einem Auslass.

Der Erfindung liegt daher die Aufgabe zugrunde, zumindest eins der oben genannten Probleme zu adressieren. Alternativ soll eine Alternative zu bisher Bekanntem bereitgestellt werden.

Die Erfindung löst die zugrundeliegende Aufgabe durch eine Vorrichtung mit den Merkmalen von Anspruch 1.

Es ist bevorzugt, dass das Gehäuse eine Mehrzahl von Gehäusesegmenten aufweist, welche mit benachbarten Gehäusesegmenten verbindbar sind, und dass jeweils ein Filterelement mindestens teilweise innerhalb eines Gehäusesegments angeordnet ist, und dass die Gehäusesegmente und Filterelemente zusammen ein modular zusammengesetztes Filtermodul bilden.

Somit kann das Filtermodul sowohl mehrere, zu einem Gehäuse zusammengefasste, Gehäusesegmente mit einem großen Filterelement, als auch eine Mehrzahl von innerhalb der Gehäusesegmente angeordneten Filterelementen umfassen. Der erzielbare Durchsatz wird somit erhöht und Transport- und Fertigungskosten gesenkt. Durch die Segmentierung des Gehäuses kann das Gehäuse an den vorhandenen Bauraum angepasst werden und fertigungsbedingte Baugrößenrestriktionen führen zu keiner Reduzierung der Durchsatzmenge, da einzelne Gehäusesegmente unabhängig voneinander gefertigt werden können.

Es wird verstanden, dass ein mindestens teilweise innerhalb eines Gehäusesegments angeordnetes Filterelement auch außerhalb des Gehäuses angeordnete Komponenten, wie beispielsweise Filter-Reinigungselemente, umfassen kann.

Ein derart modular zusammengesetztes Filtermodul kann einen oder mehrere Filter umfassen und somit flexibel und kundenspezifisch angepasst werden. Das Filtermodul ist vorzugsweise druck- und mediendicht ausgebildet. Die einzelnen Gehäusesegmente eines Filtermoduls können sowohl parallel von der zu filternden Flüssigkeit durchströmt werden als auch in einer Reihe, aufeinanderfolgend durchströmt werden.

Vorzugsweise sind mehrere Filtermodule benachbart zueinander, in Reihe geschaltet angeordnet und jeweils ein Filtermodul fluidleitend mit mindestens einem benachbarten Filtermodul verbindbar ist.

Es ist somit vorgesehen, dass benachbarte Filtermodule nach Art einer Reihen- oder Parallelschaltung, also gleichmäßig hinter- bzw. nebeneinander positioniert und miteinander verbindbar sind, sodass sie eine aus mehreren Filtermodulen bestehende Vorrichtung zur Filterung eines Fluides ausbilden.

Gemäß einer bevorzugten Ausführungsform sind mehrere Filtermodule in einer Reihe derart zwischen Einlass und Auslass angeordnet, dass die Gehäusesegmente der Filtermodule batterieartig angeordnet sind, wobei die Gehäusesegmente im Wesentlichen gleich oder identisch gestaltet sind.

Somit ist vorgesehen, dass die zu filternde Flüssigkeit sich gleichmäßig in die batterieartig und vorzugsweise somit in zwei Raumrichtungen gleichmäßig angeordneten Gehäusesegmente verteilt, in jeweils einem Filterelement gefiltert wird, und die in Reihe geschalteten folgenden Filterelemente durchströmt, bzw. die Filterelemente innerhalb des Gehäuses umströmt. Ferner bedingt die im Wesentlichen gleiche bzw. identische Gestaltung der Gehäusesegmente ein hohes Potenzial zur Kosteneinsparung während der Fertigung. So können die einzelnen Gehäusesegmente beispielsweise in einem Gussverfahren mit ein und derselben, bzw. einer Vielzahl baugleicher Gussformen hergestellt werden.

Eine derartige Vorrichtung ist somit in zwei Raumrichtungen flexibel erweiterbar. Die zu filternde Flüssigkeit durchströmt dabei sowohl parallel einzelne Gehäusesegmente eines Filtermoduls als auch die einzelnen Filtermodule in Reihe, bevor sie am Auslass der Vorrichtung austritt.

Vorzugsweise weisen die Gehäusesegmente jeweils mindestens einen Fluideinlass zum Einlassen des zu filternden Fluides und mindestens einen Fluidauslass zum Abgeben des gefilterten Fluides auf.

Somit weist jedes Gehäusesegment mindestens einen Fluideinlass zum Einlassen des schmutzigen Fluides und mindestens einen Fluidauslass zum Abgeben des gefilterten Fluides auf. Der Fluideinlass und der Fluidauslass eines Gehäusesegments sind dabei bevorzugt vertikal voneinander beabstandet angeordnet. Das Fluid strömt auf der "Schmutzseite" des Gehäusesegments in den Filter ein und verlässt diesen auf der "Reinseite" als gefiltertes Fluid. Die einzelnen Volumenströme der Gehäusesegmente, welche die Auslassöffnung verlassen, treffen dabei bevorzugt aufeinander und verlassen die Vorrichtung als ein einzelner Volumenstrom.

Gemäß einer bevorzugten Ausführungsform weisen die Gehäusesegmente mindestens eine Durchlassöffnung auf, welche dazu eingerichtet ist, das Fluid in dem Filtermodul zu verteilen bzw. durchzuleiten.

Es sind somit Durchlassöffnungen vorgesehen, durch welche das zu filternde Fluid hindurchfließen kann und so auf der Schmutzseite des Filtermoduls verteilt wird, bevor es die einzelnen Filterelemente durchströmt und die Gehäusesegmente auf der Reinseite wieder durch entsprechende Durchlassöffnungen verlässt und die nachfolgenden Gehäusesegmente durch entsprechende Durchlassöffnungen umströmt.

Eine Durchlassöffnung kann damit sowohl dazu eingerichtet sein, das zu filternde Fluid in dem Filtermodul zu verteilen, bevor es in die einzelnen Filterelemente in den Gehäusesegmenten einströmt, als auch dazu, dass gefilterte Fluid, welches aus den Filterelementen austritt, durchzuleiten, sodass es auf die Volumenströme benachbarter Gehäusesegmente trifft und schließlich die Vorrichtung als einzelner Volumenstrom gefilterten Fluides verlässt.

Eine solche erfindungsgemäße Durchlassöffnung kann beispielsweise durch die nicht mit dem Einlass oder Auslass verbundenen Fluideinlässe und Fluidauslässe der Gehäusesegmente ausgebildet sein.

Vorzugsweise sind die Fluideinlässe fluidleitend mit jeweils einem Fluidauslass eines benachbarten Filtermoduls oder dem Auslass verbindbar sind, und dass die Fluideinlässe fluidleitend mit jeweils einem Fluideinlass eines benachbarten Filtermoduls oder dem Einlass verbindbar sind.

Somit sind die baugleichen Gehäusesegmente, welche einen Fluideinlass und einen Fluidauslass aufweisen jeweils entweder mit zwei benachbarten Filtermodulen oder einem Filtermodul und dem Einlass bzw. Auslass verbindbar.

Es ist ferner vorgesehen, dass ein einzelnes Filtermodul zwischen Einlass und Auslass angeordnet ist und auslassseitig mit dem Fluidauslass und einlassseitig mit dem Fluideinlass verbunden ist, sodass die zu filternde Flüssigkeit nur ein einzelnes Filtermodul durchströmt.

Die Erfindung wird vorteilhaft durch mindestens ein Dichtungsteil zur endseitigen Abdichtung der Gehäusesegmente eines einlassseitig und/oder auslassseitig angeordneten Filtermoduls weitergebildet, wobei, dass das Dichtungsteil dazu eingerichtet ist, jeweils die Fluideinlässe bzw. Durchlassöffnung eines Gehäusesegments abzudichten.

Die Durchlassöffnungen der einzelnen Gehäusesegmente eines beispielsweise auslassseitig mit dem Auslass gekoppelten Filtermoduls werden somit durch das Dichtungsteil abgedichtet. Dies ermöglicht den Einsatz baugleicher Gehäusesegmente innerhalb eines Filtermoduls, ungeachtet der Anordnung des Filtermoduls innerhalb der Vorrichtung. Ist ein Filtermodul somit endseitig, das heißt am Einlass oder Auslass angeordnet, werden die Fluideinlässe bzw. die Durchlassöffnungen nicht genutzt, da diese weder mit dem Ein- oder Auslass noch mit einem benachbarten Gehäusesegment eines benachbarten Filtermoduls verbunden sind. Das Dichtungsteil ist somit dazu eingerichtet, diese Fluideinlässe, bzw. Durchlassöffnungen fluiddicht zu verschließen.

Gemäß einer bevorzugten Ausführungsform sind die Gehäusesegmente zumindest bereichsweise zylindrisch ausgebildet, und die Filterelemente weisen einen im Wesentlichen runden Querschnitt auf.

Die Zylindermantelfläche des zylinderförmigen Filterelements bildet demnach die Wirkfläche des Filterelements.

Die Gehäusesegmente sind somit zumindest bereichsweise druckoptimiert ausgebildet. Dies ist von Vorteil, da in den Filtermodulen aufgrund von thermischen oder auch prozessbedingten Einflüssen oder Verfahrensschritten hohe Drücke entstehen können. Ferner ermöglichen die runden Querschnitte einen einfacheren Austrag der Rückstände aus den Filtern und bedingen somit eine gleichmäßige Filterung des durchströmenden Fluides.

Vorzugsweise sind zwischen den Gehäusesegmenten eines Filtermoduls Stützstrukturen ausgebildet, welche dazu eingerichtet sind, die Gehäusesegmente zu verstärken.

Durch die Ausbildung von Stützstrukturen, vorzugsweise in den Endbereichen der Gehäusesegmente, werden diese bereichsweise derart verstärkt, dass diese druckoptimiert ausgelegt sind und somit hohe Durchsatzmengen und Prozessdrücke realisieren können. Ein idealer Druckbehälter hat eine im Wesentlichen runde Form. Durch die bereichsweise zylindrische Ausbildung und insbesondere die Verstärkung der Randbereiche verhält sich ein derartiges Gehäusesegment ähnlich wie ein idealisierter Druckbehälter.

Die Erfindung wird vorteilhaft durch eine Filtermodul-Kopplungseinheit zur Fixierung und Kopplung von zwei oder mehr Filtermodulen weitergebildet, mit mindestens einem Kopplungsmittel, welches dazu eingerichtet ist, benachbart zueinander angeordnete Filtermodule miteinander zu koppeln, und mindestens einem dem Kopplungsmittel zugeordneten Fixierungsmittel, welches dazu eingerichtet ist, die benachbart zueinander angeordneten Filtermodule in ihrer Position zu fixieren.

Durch solche eine Kopplungseinheit werden die einzelnen Filtermodule miteinander verbunden, insbesondere kraftschlüssig gekoppelt. Eine solche Kopplungseinheit ist bevorzugt dazu eingerichtet, eine Vielzahl benachbart zueinander angeordneter Filtermodule miteinander zu koppeln, sodass beliebig viele Filtermodule zu einer Vorrichtung kundenwunschspezifisch zusammengefasst werden können. Die Kopplungseinheit kann beispielsweise als ein Drahtseil, eine Spannstange, eine Gewindestange mit Innen-, bzw. Außengewinde oder eine Schlaufe ausgebildet sein. Ein Fixierungsmittel fixiert die einzelnen Filtermodule bevorzugt relativ zueinander und zu dem Kopplungsmittel, sodass diese positionsgenau an dem Kopplungsmittel fixiert werden können. Als ein Fixierungsmittel wird sowohl eine mechanische Fixierung wie eine Mutter verstanden, als auch eine chemisch-physikalische Fixierung, wie beispielsweise Klebstoff oder auch eine stoffschlüssige Verbindung zwischen Filtermodul und Kopplungseinheit.

Gemäß einer bevorzugten Ausführungsform sind jedem Gehäusesegment mindestens ein Kopplungsmittel, vorzugsweise jeweils drei vertikal beabstandete Kopplungsmittel zugeordnet, welche endseitig mit den Fixierungsmitteln in Eingriff bringbar sind, wobei vorzugsweise die Kopplungsmittel als Stangen ausgebildet sind.

Somit ist jedem Gehäusesegment ein Kopplungsmittel zugeordnet, sodass sich die auf die benachbart zueinander angeordneten Filtermodule wirkenden Kräfte auf die einzelnen Gehäusesegmente, welche mittels der Kopplungsmittel verbunden sind, verteilen. Besonders bevorzugt sind dabei mehrere, zum Beispiel drei vertikal beabstandete Kopplungsmittel vorgesehen, sodass sich die auf die einzelnen Gehäusesegmente wirkende Kraft über die Höhe des Gehäusesegments verteilt.

Eine betriebsmäßige und konstruktiv einfache Lösung ist dabei eine Stange als Kopplungsmittel, welche endseitig mit einem Fixierungsmittel, wie beispielsweise einer Mutter in Eingriff bringbar ist, sodass die einzelnen Gehäusesegmente eines Filtermoduls kraftschlüssig mit den Gehäusesegmenten benachbart angeordneter Filtermodule koppelbar sind. Die Fixierungsmittel sind dabei in einfacher Weise wieder lösbar, sodass die Vorrichtung bei Bedarf modular erweiterbar ist.

Vorzugsweise weisen die Gehäusesegmente korrespondierend zu den Kopplungsmitteln ausgebildete Aufnahme für die Kopplungsmittel auf, welche vorzugsweise als Aufnahmen zum Hindurchführen der Stangen ausgebildet sind.

Durch in den Gehäusesegmenten ausgebildete Aufnahmen für die Kopplungsmittel, können diese auch bei begrenztem Bauraum einfach in die Vorrichtung integriert werden. Ferner wird die Bauteilvielfalt reduziert, wodurch sich auch aus ökonomischer Sicht Vorteile ergeben. Es sind somit mehrere Filtermodule mittels des Kopplungsmittels miteinander verbindbar und werden insbesondere durch dieses relativ zueinander ausgerichtet, sodass die Montage und insbesondere die Verbindung der einzelnen Filtermodule miteinander erleichtert wird.

Vorzugsweise umfasst der Einlass einen Einlassflansch zur Verbindung mit einer Rohrleitung und ein einlassseitiges Rohrstück zur Verbindung mit den Gehäusesegmenten und vorzugsweise umfasst der Auslass einen Auslassflansch zur Verbindung mit einer Rohrleitung und ein auslassseitiges Rohrstück zur Verbindung mit den Gehäusesegmenten.

Es sind somit Rohrleitungen, welche entweder das zu filternde Fluid hin zu der Vorrichtung zum Filtern leiten oder das durch die Vorrichtung gefilterte Fluid aufnehmen und dieses weiterleiten, mit der Vorrichtung in einfacher Weise durch eine Flanschverbindung verbindbar.

Die Gehäusesegmente und damit die Filtermodule können ferner unabhängig von den, bei einem Endverbraucher vorhandenen Rohrsystemen, gestaltet werden. Die Vorrichtung kann durch entsprechende Gestaltung des Einlass-, bzw. Auslassflansches einfach mit dem Rohrsystem verbunden werden.

Vorzugsweise ist das einlassseitige Rohrstück korrespondierend zu dem auslassseitigen Rohrstück und der Einlassflansch korrespondierend zu dem Auslassflansch ausgebildet.

Durch die Ausbildung des Einlassflansches korrespondierend zu dem Auslassflansch können die Rohrleitungen eines solchen Rohrsystems endseitig in einfacher Weise mit der Vorrichtung verbunden werden.

Die Bauteilvielfalt und folglich die Fertigungskosten werden somit reduziert.

Vorzugsweise weisen die Rohrstücke eine erste filtermodulseitige Querschnittsfläche und eine zweite flanschseitige Querschnittsfläche auf, und der Mittelpunkt der flanschseitigen Querschnittsfläche ist vertikal und/oder horizontal beabstandet zu dem Mittelpunkt der filtermodulseitigen Querschnittsfläche angeordnet.

Die Vorrichtung zum Filtern arbeitet somit "In-Line". Das bedeutet, dass die Vorrichtung in ein bestehendes Rohrsystem integriert werden kann, in dem ein Teil des Rohrsystems entfernt und an entsprechender Stelle die Filtervorrichtung eingesetzt werden kann.

Besonders bevorzugt ist der Auslass des Gehäuses koaxial zum Einlass angeordnet. So sind Einlass und Auslass der Filter- Vorrichtung koaxial zueinander angeordnet, wodurch die Filter-Vorrichtung auf einfache Weise beispielsweise in eine bestehende Rohrleitung "In-Line" einbaubar ist.

Das entsprechende ein- bzw. auslassseitige Rohrstück ist derart ausgebildet, dass es die Öffnung des Filtermoduls, welche durch die einzelnen Fluideinlässe der Gehäusesegmente ausgebildet wird und beispielsweise einen ovalen oder eckigen Querschnitt aufweisen kann, mit dem Einlassflansch, welcher mit der Rohrleitung verbindbar ist, verbindet. Gleiches gilt für den auslassseitigen Flansch und die entsprechenden Fluidauslässe der Gehäusesegmente.

Der Ein- und Auslassflansch können dabei vorzugsweise nach Standards der DIN bzw. ASME oder anderen Standards ausgebildet sein, und sind somit in einfacher Weise mit einer beliebig ausgebildeten Öffnung des Filtermoduls verbindbar.

Die Vorrichtung kann somit auch bei vertikal Fluideinlässen und Fluidauslässen in den Gehäusesegmenten derart mit Rohrleitungen verbunden werden, dass durch die vertikale Beabstandung der Mittelpunkte der filtermodulseitigen Querschnittsfläche und der flanschseitigen Querschnittsfläche Höhenunterschiede ausgeglichen werden können.

Vorzugsweise ist der Abstand des Mittelpunktes der flanschseitigen Querschnittsfläche und der filtermodulseitigen Querschnittsfläche in vertikaler und/oder horizontaler Richtung durch eine Rotation um eine horizontale Achse veränderbar.

Somit kann die die Position in vertikaler bzw. horizontaler Richtung des Ein- und Auslassflansches individuell auf die Gegebenheiten am Einbauort angepasst werden. Folglich kann eine erfindungsgemäße Vorrichtung auch in Rohrsysteme integriert werden, welche sich auf unterschiedlichen Höhen erstrecken, bzw. horizontal beabstandet Teilstücke aufweisen. Die Flexibilität der Einbausituation wird somit in vorteilhafter Weise erhöht.

Die Erfindung wird vorteilhaft durch eine Filter-Reinigungseinrichtung zu Reinigung der Filterelemente von Rückständen des gefilterten Fluides weitergebildet, mit mindestens einem bewegbar gelagerten Filter-Reinigungselement, welches korrespondierend zu jeweils einem Filterelement ausgebildet und dazu eingerichtet ist, das Filterelement von Rückständen des gefilterten Fluides zu reinigen, und einem mit den Filterelementen fluidleitend verbundenen Rückspülsystem, zur Leitung und Abgabe der Rückstände des gefilterten Fluides.

Strömt nun zu filternde Flüssigkeit durch das Filterelement, in axialer Richtung, muss diese Flüssigkeit zwischen innerer Oberfläche des Filterelements und Filterreinigungselement hindurch strömen, wodurch die Strömungsgeschwindigkeit lokal stark erhöht und der Druck lokal stark gesenkt wird. Dadurch werden an der inneren Oberfläche des Filterelements anhaftende aus der Flüssigkeit herausgefilterte Partikel gelöst und so das Filterelement gereinigt. Dieser Effekt wird auch als Bernoulli-Effekt bezeichnet. Diese Art der Reinigung ist besonders vorteilhaft, da das Filterelement so besonders schonend gereinigt wird, aufgrund der berührungslosen Reinigung.

Die Erfindung wird vorteilhaft durch eine Hubeinrichtung mit einem Aktuator und einer mit dem Filter-Reinigungselement gekoppelten Hubstange weitergebildet, wobei die Hubeinrichtung dazu eingerichtet ist, das Filter-Reinigungselement so in das Filterelement mittels der Hubstange einzuführen, dass zwischen einer inneren Wand des Filterelements und dem Filter-Reinigungselement ein Reinigungsspalt gebildet wird, sodass lokal eine Strömungsgeschwindigkeit der zu filternden Flüssigkeit erhöht und dabei in dem Filterelement befindliche Stoffe abgespült werden.

Eine solche Hubeinrichtung kann beispielsweise hydraulisch, pneumatisch, elektrisch, elektromagnetisch oder auf andere Weise ausgebildet sein. Alternativ oder zusätzlich kann sie einen Seilzug oder ähnliches aufweisen, um die Hubstange axial in das Filterelement einzuführen. Die Reinigung des Filters kann somit berührungslos und vollautomatisiert erfolgen.

Vorzugsweise umfasst das Rückspülsystem ferner einen Rückspülauslass zum Abgeben der Rückstände des gefilterten Fluides, eine Vielzahl von Rückspülrohren zur fluidleitenden Verbindung benachbarter Filtermodule, ein Verbindungsrohr zum fluidleitenden Verbinden der Rückspülrohre miteinander und mit dem Rückspülauslass.

Wurde ein Filterelement mittels des Filter-Reinigungselements gereinigt, ist die in dem Filterelement vorhandene Flüssigkeit besonders stark mit Partikeln (abgereinigten Partikeln) beladen, sodass es vorteilhaft ist, diese stark verunreinigte Flüssigkeit durch Rückspülrohre zu leiten und mittels eines Rückspülauslasses aus der Vorrichtung zu entfernen. So werden die Filterelemente nicht sofort wieder verschmutzt und können effektiv weiter zum Filtern genutzt werden.

Durch die Verbindung benachbarter Filtermodule mittels eines Verbindungsrohres, kann ein gemeinsamer Rückspülauslass genutzt werden, sodass es besonders einfach ist, die rückgespülte Flüssigkeit aus der Vorrichtung zu entfernen.

Vorzugsweise sind die Rückspülrohre beabstandet und im Wesentlichen parallel zueinander angeordnet, und die Rückspülrohre weisen jeweils mindestens ein absperrbares Rohrsegment mit einem absperrbaren Rückspülanschluss auf, wobei jeweils ein Rohrsegment mit einem, insbesondere in einer Reihe benachbart zueinander angeordneten, Gehäusesegment der Filtermodule verbunden ist.

Somit kann eine kompakte Bauweise realisiert werden und insbesondere batterieartig angeordnete Gehäusesegmente durch ein solches Rohrsystem von Rückspülrohren miteinander verbunden werden. Durch das Absperren einzelner Rückspülanschlüsse, welche einem Rohrsegment zugordnet sind, können die Gehäusesegmente selektiv mittels der Rückspülrohre mit dem Auslass der Vorrichtung verbunden werden, um die Rückstände des gereinigten Fluides aus der Vorrichtung zu entfernen.

Gemäß der Erfindung wird die zugrundeliegende Aufgabe durch eine Vorrichtung mit den Merkmalen von Anspruch 1 gelöst. Durch eine erfindungsgemäße Filtervorrichtung wird die Zugänglichkeit der Filterelemente und der Filter-Reinigungselemente zu Reinigungs- und Wartungszwecken erheblich erleichtert. Der Gehäusedeckel kann somit auf einfache Weise von dem Gehäuse entfernt werden, ohne dass beispielsweise Teile des Rückspülsystems demontiert werden müssen. Ausfallszeiten aufgrund von Wartung und Montage können somit minimiert und die erzielbare Durchsatzmenge gefilterter Flüssigkeit für eine solche Vorrichtung erheblich erhöht werden. Durch das Absperren einzelner Rohrsegmente können beispielsweise die Filterelemente selektiv gewartet werden, sodass Ausfallzeiten vermieden werden.

Ferner wird das Rückspülsystem nicht durch die Demontage bei der Wartung und Reinigung des Filters und der Filter-Reinigungseinrichtung beschädigt, sodass es zu Schäden in der Vorrichtung und somit zu Ausfallzeiten kommt. Die Filter-Reinigungseinrichtung, welche dem Gehäusedeckel zugeordnet ist, kann somit gemeinsam mit diesem entfernt und gewartet werden. Zugleich ist das Filterelement einfach zugänglich und kann gegebenenfalls ausgetauscht oder gereinigt werden. Insgesamt reduziert sich somit der Wartungsaufwand erheblich.

Gemäß einer bevorzugten Weiterbildung der Erfindung umfasst die Filter-Reinigungseinrichtung ferner ein in den Gehäusedeckel integriertes Filter-Reinigungselement, wobei das Filter-Reinigungselement in das Filterelement einführbar und dazu eingerichtet ist, das Filterelement von Rückständen des gefilterten Fluides zu reinigen.

Somit beeinflusst ein solches Filter-Reinigungselement das Filterelement nicht bei der Reinigung des durchströmenden Fluides und reduziert somit die gefilterte Durchsatzmenge des jeweiligen Filterelements. Durch die Integration des Filter-Reinigungselements in dem Gehäusedeckel wird dessen Montage vereinfacht, sodass nur noch der Gehäusedeckel mit dem jeweiligen Gehäusesegment verbunden werden muss. Es entfallen somit Montageschritte bei dem Kunden und die Zugänglichkeit zur Reinigung des Filter-Reinigungselements ist somit in einfacher Weise realisiert.

Die Erfindung wird dadurch vorteilhaft weitergebildet, dass die Filter-Reinigungseinrichtung ferner umfasst: eine Hubeinrichtung mit einem Aktuator und einer mit dem Filter-Reinigungselement gekoppelten Hubstange, wobei die Hubeinrichtung dazu eingerichtet ist, das Filter-Reinigungselement so in das Filterelement mittels der Hubstange einzuführen, dass zwischen einer inneren Wand des Filterelements und dem Filter-Reinigungselement ein Reinigungsspalt gebildet wird, sodass lokal eine Strömungsgeschwindigkeit der zu filternden Flüssigkeit erhöht und dabei in dem Filterelement befindliche Stoffe abgespült werden.

Eine solche Hubeinrichtung macht sich die obenstehend beschriebenen Vorteile von Hubeinrichtungen für Filter-Reinigungseinrichtungen zu eigen.

Vorzugsweise ist die Hubeinrichtung dem Gehäusedeckel zugeordnet und insbesondere der Aktuator mit dem Gehäusedeckel fest verbunden, und in dem Gehäusedeckel eine Öffnung zur Durchführung der Hubstange ausgebildet.

Die Hubeinrichtung, welche wahlweise auch pneumatisch, elektrisch oder hydraulisch betrieben werden kann, ist somit beabstandet zu dem Rohrsystem und dem Strömungspfad des zu filternden Fluides angeordnet. Schäden an der Hubeinrichtung in Folge von Leckagen können somit weitestgehend vermieden werden. Ferner sieht die Zuordnung der Hubeinrichtung zum Gehäusedeckel eine einfache Wartung der Hubeinrichtungen insbesondere des Aktuators vor, welche die Ausfallzeiten aufgrund von Wartungsarbeiten reduziert.

Gemäß einer bevorzugten Weiterbildung der Erfindung umfasst das Rückspülsystem ferner eine Vielzahl von Rückspülrohren zur fluidleitenden Verbindung benachbarter Filtermodule, wobei die Rückspülrohre jeweils mindestens ein Rohrsegment mit einem absperrbaren Auslass aufweisen, welches fluidleitend mit dem Filterelement verbunden ist, und wobei in dem Gehäusedeckel ein Rückspülventil integriert ist, welches dazu eingerichtet ist, die Rückspülrohre zumindest abschnittsweise abzusperren.

Somit sind die einzelnen Gehäusesegmente mittels ihnen zugeordneter Rohrsegmente und absperrbarer Rückspülanschlüsse mit dem Rohrsystem verbindbar und von diesem auch wieder absperrbar. Durch die Integration eines Rückspülventils in dem Gehäusedeckel kann die Flüssigkeit aus dem Inneren des Gehäusesegments über den Gehäusedeckel und durch den Ventilsitz hindurch ein einzelnes Gehäusesegment verlassen und mittels des absperrbaren Rückspülanschlusses dem jeweiligen Rohrsegment und damit dem Rohrsystem bereitgestellt werden. Es ist somit nicht notwendig, den Gehäusedeckel selbst mit dem Rückspül-Rohrsystem zu verbinden, sondern mittels eines solchen Rückspülventils das Gehäusesegment und ein zugeordnetes Rohrsegment miteinander zu verbinden, bzw. voneinander zu trennen.

Vorzugsweise weist das Rückspülventil ein Ventilgehäuse auf, welches durch den Gehäusedeckel ausgebildet wird, und dass an dem Ventilgehäuse ein Ventilkörper bewegbar gelagert ist, welcher mit einem Ventilsitz in Anlage bringbar ist, um das Ventil zu schließen.

Das stark verunreinigte Fluid kann somit an dem Ventilsitz vorbei, welcher durch den Ventilkörper entweder versperrt oder freigegeben wird, hin zum Rückspülauslass fließen, sodass es mittels des Rohrsystems am Auslass der Vorrichtung entfernt werden kann. Durch die Integration des Ventilgehäuses in den Gehäusedeckel kann ferner die Bauteilvielfalt sowie die Fertigungstiefe reduziert werden.

Vorzugsweise ist das Rückspülventil mit einem Rückstellelement gekoppelt, welches in dem Gehäusedeckel angeordnet und dazu eingerichtet ist, eine Rückstellkraft auf den Ventilkörper aufzubringen, um den Ventilkörper in Anlage mit dem Ventilsitz zu halten.

Ein solches Ventil stellt ein ausfallsicheres Absperrmittel dar, welches auch bei einem Systemausfall im verschlossenen Zustand verharrt, sodass nicht in unerwünschter Weise Fluid aus der Vorrichtung austritt.

Vorzugsweise ist in dem Gehäusedeckel ein Durchflusskanal ausgebildet, welcher dazu eingerichtet ist, das Filterelement fluidleitend mit dem Rückspülrohr zu verbinden, und dass der Ventilkörper den Durchflusskanal versperrt, wenn das Ventil geschlossen ist.

Durch einen solchen, in dem Gehäusedeckel ausgebildeten Durchflusskanal kann das Rückspülrohr mit dem Gehäusesegment in einfacher und kompakter Bauweise verbunden werden. Somit kann bei geöffnetem Gehäusedeckel kein Fluid aus dem Gehäusesegment in das Rohrsegment eines Rückspülrohrs eintreten, da der Durchflusskanal gemeinsam mit dem Gehäusedeckel demontiert ist. Es sind somit keine weiteren Absperrmechanismen notwendig um das ungewollte Austreten von Fluid zu verhindern.

Gemäß einer bevorzugten Ausführungsform ist der Ventilsitz als eine Blende ausgebildet, welche dazu eingerichtet ist, die Strömungsgeschwindigkeit des Volumenstroms zu verändern, welcher in das Rückspülrohr einfließt.

Die Strömungsgeschwindigkeit des Volumenstroms kann somit in einfacher Weise durch Variation des inneren Durchmessers der Blende, welche den Ventilsitz ausbildet, variiert werden. Die Strömungsgeschwindigkeit des Volumenstroms hat dabei Einfluss auf die Reinigungsleistung bzw. den Austrag an stark verunreinigter Flüssigkeit aus dem Filterelement.

Nachstehend wird die Erfindung anhand von Ausführungsbeispielen unter Bezugnahme auf die beiliegenden Figuren beschrieben. Identische Bauteile sind dabei in den Ausführungsbeispielen mit gleichen Bezugszeichen versehen. Es zeigen:
- Fig. 1:: eine perspektivische Ansicht einer Vorrichtung zum Filtern eines Fluides gemäß einem ersten Ausführungsbeispiel;
- Fig. 2a:: eine Schnittdarstellung der Vorrichtung zum Filtern eines Fluides gemäß Fig. 1 in einer Seitenansicht;
- Fig. 2b:: eine Schnittdarstellung der Vorrichtung zum Filtern eines Fluides gemäß Fig. 1 in einer perspektivischen Ansicht;
- Fig. 3:: einen Ausschnitt der in Fig. 1 gezeigten Vorrichtung;
- Fig. 4a:: einen Ausschnitt der in Fig. 2a gezeigten Schnittdarstellung der Vorrichtung gemäß Fig. 1;
- Fig. 4b:: einen Ausschnitt der in Fig. 2b gezeigten Schnittdarstellung der Vorrichtung gemäß Fig. 1;
- Fig. 5:: eine perspektivische Ansicht einer Vorrichtung zum Filtern eines Fluides gemäß einem zweiten Ausführungsbeispiel;
- Fig. 6:: einen ersten Ausschnitt der in Fig. 5 gezeigten Vorrichtung;
- Fig. 7:: einen zweiten Ausschnitt der in Fig. 5 gezeigten Vorrichtung;
- Fig. 8:: eine Schnittdarstellung der Vorrichtung zum Filtern eines Fluides gemäß Fig. 5 in einer perspektivischen Ansicht;
- Fig. 9:: einen ersten Ausschnitt der in Fig. 8 gezeigten Schnittdarstellung der Vorrichtung gemäß Fig. 5;
- Fig. 10:: einen zweiten Ausschnitt der in Fig. 8 gezeigten Schnittdarstellung der Vorrichtung gemäß Fig. 5;
- Fig. 11:: eine Schnittdarstellung der Vorrichtung zum Filtern eines Fluides gemäß Fig. 5 in einer Seitenansicht.

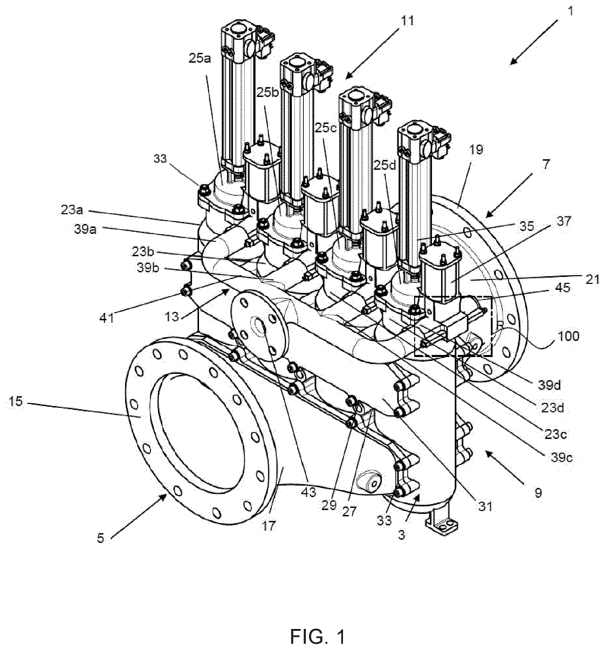

Fig. 1 zeigt eine perspektivische Ansicht einer Vorrichtung zum Filtern eines Fluides gemäß einem ersten bevorzugten Ausführungsbeispiel.

Die Vorrichtung 1 umfasst ein Gehäuse 3 mit einem Einlass 5 zum Einlassen des zu filternden Fluides und einem Auslass 7 zum Abgeben des gefilterten Fluides aus dem Gehäuse 3.

Das Gehäuse 3 umfasst ferner ein Filtermodul 9 mit vier in dem Gehäuse 3 angeordneten Filterelementen zum Reinigen der zu filternden Flüssigkeit.

Die Vorrichtung 1 umfasst ferner mindestens eine Filter-Reinigungseinrichtung 11, welche jeweils einem Filtermodul 9 zugeordnet, und dazu eingerichtet ist, das Filtermodul 9, insbesondere die in dem Filtermodul 9 angeordneten Filterelemente, zu reinigen.

Das Gehäuse 3 ist ferner mit einem Rückspülsystem 13 verbunden, welches dazu eingerichtet ist, die Rückstände, welche mittels der Filter-Reinigungseinrichtung 11 aus den Filterelementen herausgelöst werden, wegzuleiten und abzugeben.

Der Einlass 5 umfasst einen Einlassflansch 15 zur Kopplung mit einer Rohrleitung zur Bereitstellung von zu filterndem Fluid und ein Rohrstück 17 zur Befestigung an dem Gehäuse 3 der Vorrichtung 1.

Der Einlassflansch 15 weist eine erste Querschnittsfläche auf, welche korrespondierend zu einer Rohrleitung ausgebildet ist. Das Rohrstück 17 weist filtermodulseitig eine zweite Querschnittsfläche auf, welche korrespondierend zu dem Gehäuse 3 ausgebildet ist. Der Flächenmittelpunkt der rohrseitigen Querschnittsfläche ist vertikal beabstandet zu dem Flächenmittelpunkt der gehäuseseitigen Querschnittsfläche, also insbesondere unterhalb von diesem, angeordnet.

Der Auslass 7 umfasst einen Auslassflansch 19 zur Kopplung mit einer Rohrleitung zur Aufnahme des gefilterten Fluides und ein Rohrstück 21 zur Verbindung mit dem Gehäuse 3.

Der Auslassflansch 19 weist ebenfalls eine rohrleitungsseitige Querschnittsfläche auf und eine zweite filtermodulseitige Querschnittsfläche, welche korrespondierend zu der Öffnung des Gehäuses 3 ausgebildet ist. Die Flächenmittelpunkte der gehäuseseitigen Querschnittsfläche und der rohrleitungsseitigen Querschnittsfläche sind vertikal voneinander beabstandet, wobei der Flächenmittelpunkt der gehäuseseitigen Querschnittsfläche oberhalb dem Flächenmittelpunkt der rohrleitungsseitigen Querschnittsfläche liegt.

Das Filtermodul 9 umfasst vier benachbart zueinander angeordnete Gehäusesegmente 23a, 23b, 23c, 23d. Die Gehäusesegmente 23a, 23b, 23c, 23d sind batterieartig zueinander angeordnet. Die Gehäusesegmente 23a, 23b, 23c, 23d sind bereichsweise zylindrisch und im Wesentlichen identisch zueinander ausgebildet. Jedes der Gehäusesegmente 23a, 23b, 23c, 23d ist mittels eines Gehäusedeckels 25a, 25b, 25c, 25d verschließbar. Der Gehäusedeckel 25a, 25b, 25c und 25d ist mit dem jeweiligen Gehäusesegment 23a, 23b, 23c und 23d mittels Verbindungsmitteln, gemäß diesem Ausführungsbeispiel Schrauben 33, verbunden.

Zwischen den Gehäusesegmenten 23 eines Filtermoduls 9 ist jeweils eine Stützstruktur 27 ausgebildet. In den Stützstrukturen 27 sind zylindrische Aussparungen ausgebildet.

Ein solches Filtermodul 9 kann aus beliebig vielen, miteinander verbindbaren, Gehäusesegmenten einschließlich in diesen angeordneten Filterelementen zusammengesetzt sein.

In den Gehäusesegmenten 23a, 23b, 23c, 23d ist einlassseitig eine mit dem Einlassflansch verbindbare Öffnung ausgebildet. Ferner weisen die Gehäusesegmente 23a, 23b, 23c, 23d einlassseitig eine zweite gemeinsame Öffnung auf, welche mittels eines Dichtungsteils 31 verschließbar ist.

Das Dichtungsteil 31 ist mittels einer Mehrzahl an Verbindungsmitteln, gemäß diesem Ausführungsbeispiel Schrauben 33 mit den Gehäusesegmenten 23a, 23b, 23c, 23d verbindbar.

Die Filter-Reinigungseinrichtung 11 zur Reinigung des Filtermoduls 9 umfasst eine Mehrzahl an Filter-Reinigungselementen, wobei jeweils ein Filter- Reinigungselement dazu eingerichtet ist, eines der in den Gehäusesegmenten 23a, 23b, 23c, 23d angeordneten Filterelemente zu reinigen.

Die Filter-Reinigungseinrichtung 11 umfasst ferner eine zu der Zahl der Filter-Reinigungselemente korrespondierende Anzahl Hubeinrichtung 35 zum Antreiben der Filter-Reinigungselemente. Die Gehäusesegmente 23a, 23b, 23c, 23d sind mittels eines steuerbaren Rückspülventils 37 mit dem Rückspülsystem 13 verbindbar und von diesem absperrbar.

Das Rückspülsystem 13 umfasst eine Mehrzahl von Rückspülrohren 39, welche mit einem Verbindungsrohr 41 gekoppelt sind. Das Verbindungsrohr 41 verbindet die Rückspülrohre 39 mit einem Rückspülauslass 43, welcher dazu eingerichtet ist, das stark verschmutzte Fluid aus dem Gehäuse 3 abzugeben.

Die Rückspülrohre 39 sind mittels der Rohr-Kopplungseinheit 45 mit den Gehäusesegmenten 23a, 23b, 23c, 23d verbunden.

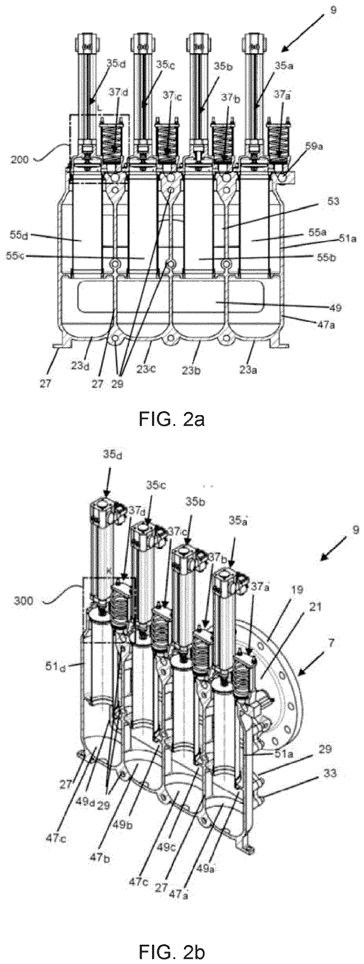

Wie der Schnittdarstellung der Vorrichtung 1 gemäß der Fig. 2a und 2b zu entnehmen ist, umfasst das Filtermodul 9 vier benachbart zueinander angeordnete und miteinander verbundene Gehäusesegmente 23a, 23b, 23c, 23d. Ferner sind zwischen den Gehäusesegmenten 23a, 23b, 23c, 23d Stützstrukturen 27 ausgebildet, welche die Gehäusesegmenten 23a, 23b, 23c, 23d verstärken. In den Stützstrukturen 27 sind jeweils drei vertikal beabstandete zylindrische Aussparungen ausgebildet, welche zur Durchführung von Montagemitteln oder Kopplungsmitteln eingerichtet sind.

Die Gehäusesegmente 23a, 23b, 23c, 23d weisen jeweils eine unteren Gehäuseteil 47a, 47b, 47c und 47d mit einem gemeinsamen Fluideinlass 49 zur Verbindung mit dem Einlass 5 und einen oberen Gehäuseteil 51a, 51b, 51c und 51d mit einem gemeinsamen Fluidauslass 53 zur Verbindung mit dem Auslass 7 auf. Der untere Gehäuseteil 47a, 47b, 47c und 47d und der obere Gehäuseteil 51a, 51b, 51c und 51d sind räumlich voneinander getrennt. Das verschmutzte Fluid strömt durch den Einlass 5 in den unteren Gehäuseteil 47a, 47b, 47c und 47d, dieser wird aus diesem Grund auch als "Schmutzseite" bezeichnet. Das gereinigte Fluid strömt durch den oberen Gehäuseteil 51a, 51b, 51c und 51d zum Auslass 7, dieser wird aus diesem Grund auch als "Reinseite" bezeichnet.

Wie insbesondere Fig. 2b zeigt, wird der Fluideinlass 49 durch die einzelnen Fluideinlässe 49a, 49b, 49c und 49d in den Gehäusesegmenten 23a, 23b, 23c, 23d gebildet und der Fluidauslass 53 durch die einzelnen Fluidauslässe in den Gehäusesegmenten 23a, 23b, 23c, 23d.

In jedem der Gehäusesegmente 23a, 23b, 23c, 23d ist jeweils ein Filterelement 55a, 55b, 55c und 55d angeordnet. Die Gehäusesegmente 23a, 23b, 23c, 23d sind bereichsweise zylindrisch ausgebildet und die Filterelemente 55a, 55b, 55c und 55d, welche einen im Wesentlichen zylindrischen Querschnitt aufweisen, sind koaxial zu diesen angeordnet.

Die Filter-Reinigungseinrichtung 11 zur Reinigung des Filtermoduls 9 ist zumindest teilweise mit dem Gehäusedeckel 25a, 25b, 25c, 25d gekoppelt.

Dabei ist die Hubeinrichtung 35a, 35b, 35c und 35d fest mit dem Gehäusedeckel 25a, 25b, 25c, 25d verbunden und die Rückspülventile 37a, 37b, 37c und 37d zumindest teilweise in den Gehäusedeckel 25a, 25b, 25c, 25d integriert.

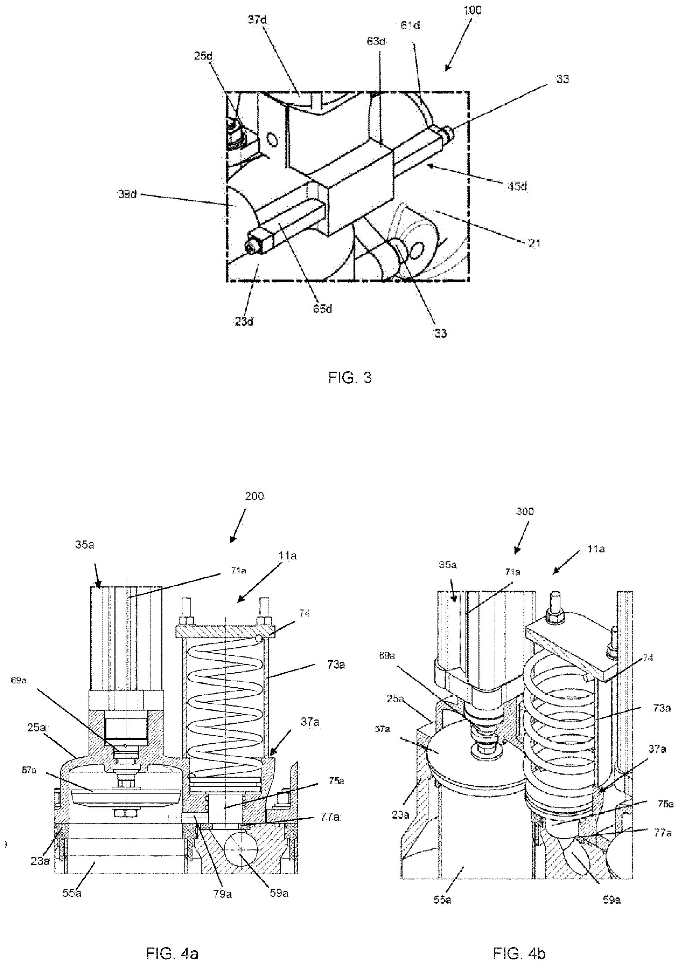

Die Mehrzahl an Filter-Reinigungselementen 57 (vgl. Fig. 4a und 4b) zur Reinigung der Filter 55a, 55b, 55c und 55d der Filter-Reinigungseinrichtung 11 ist in dem Gehäusedeckel 25a, 25b, 25c, 25d angeordnet und mittels einer korrespondierenden Hubeinrichtung 35a, 35b, 35c und 35d in das jeweilige Filterelement 55a, 55b, 55c und 55d hinein bewegbar.

Das Filter-Reinigungselemente 57 sind als Scheibe mit einem im Wesentlichen runden Querschnitt ausgebildet, wobei der Außenradius des Filter-Reinigungselementes 57 kleiner ist als der Innenradius des Filterelements 55a, 55b, 55c und 55d.

Die Gehäusesegmente 23a, 23b, 23c, 23d sind mittels des steuerbaren Rückspülventils 37a, 37b, 37c und 37d mit dem Rückspülsystem 13, insbesondere den Rückspülrohren 39 verbindbar und von diesen absperrbar.

Wie insbesondere Fig. 3 zeigt, sind die Rückspülrohre 39d bzw. ein einzelnes Rohrsegment 59d des Rückspülsystems endseitig mittels einer Rohrkappe 61d fluiddicht verschließbar. Somit kann das durch das Rückspülsystem 13 transportierte Fluid einzig durch den Rückspülauslass 43 abgegeben werden.

Die Rohr-Kopplungseinheit 45d umfasst eine Mehrzahl von Rohr-Manschetten 63d, welche jeweils ein Rückspülrohr 39d bzw. ein einzelnes Rohrsegment 59d umschließen und mit den Gehäusesegmenten 23d verbinden. Die Rohr-Manschetten 63d sind dazu eingerichtet Kopplungsstangen 65d durchzuführen. Kopplungsstangen 65d weisen endseitig Eingriffsmittel 67 auf, welche dazu eingerichtet sind, mit Kopplungsstangen 65d benachbarter Rohrsegmente 59 eines Rückspülrohrs 39d in Eingriff gebracht zu werden.

Ferner ist die Rohrkappe 61d ist mit der Rohr-Kopplungseinheit 45d verbindbar und mittels dieser mit dem Rückspülsystem 13 und dem Gehäuse 3 verbunden.

Wie die Fig. 4a und 4b zeigen, umfasst die Hubeinrichtung 35a jeweils eine Hubstange 69a, welche mit dem Filter-Reinigungselement 57a gekoppelt ist, und einen Aktuator 71a der dazu eingerichtet ist, die Hubstange 69a anzutreiben.

In dem Gehäusedeckel 25a ist jeweils eine Öffnung zur Durchführung der Hubstange 69a ausgebildet.

Werden die Filter-Reinigungselemente 57a von der mittels des Aktuators 71a angetrieben Hubstange 69a in das Filterelement 55a hinein bewegt, reduziert sich die Querschnittsfläche des Filterelements 55a. Durch diese Reduzierung der Querschnittsfläche durch welche das Fluid strömen kann, wird die Strömungsgeschwindigkeit signifikant erhöht.

Durch diese Erhöhung der Strömungsgeschwindigkeit werden Rückstände aus den Filterelementen 55a entfernt. Diese Rückstände werden durch den Gehäusedeckel 25a, insbesondere durch das Rückspülrohr 59, in das Rückspülsystem 13 geleitet.

Das Rückspülventil 37a umfasst einen Ventilkörper 75a und einen Ventilsitz 77a, mit welchem der Ventilkörper 75a in Anlage bringbar ist. Das Rückspülventil 37a umfasst ferner ein Rückstellelement 73a welches dazu eingerichtet ist, eine Rückstellkraft auf den Ventilkörper 75a aufzubringen, sodass dieser in Anlage mit dem Ventilsitz 77a gehalten wird. Das Rückstellelement 73a ist als Feder ausgebildet und in einem, in den Gehäusedeckel integriertes, Ventilgehäuse 74 angeordnet.

Der Ventilkörper 75a ist bereichsweise zylindrisch ausgebildet und wird in einer korrespondierenden Aussparung in dem Gehäusedeckel 25a geführt.

Der Ventilsitz 77a ist als Blende ausgebildet, welche dazu eingerichtet ist die Strömungsgeschwindigkeit des in das Rückspülsystem 13 einfließenden Fluides zu steuern. Die Strömungsgeschwindigkeit ist somit durch Austausch der Blende anwendungsspezifisch reguliert war.

In dem Gehäusedeckel 25a ist ein, durch das Rückspülventil 37a absperrbarer, Durchflusskanal 79a ausgebildet, welcher den oberen Gehäuseteil 51a (vgl. Fig. 2b) und das Rohrsegment 59a verbindet.

Das Rückspülventil 37a ist vorzugsweise elektropneumatisch steuerbar, so dass der Ventilkörper 75a entgegen der Rückstellkraft des Rückstellelements 73a bewegt wird, wenn aufgrund eines Reinigungsvorgangs durch die Filter-Reinigungseinrichtung 11 stark verunreinigtes Fluid aus dem jeweiligen Gehäusesegment 23a heraus in das Rückspülsystem 13 geleitet werden muss.

Die Filter-Reinigungseinrichtung 11 kann somit beispielsweise mittels einer Steuereinrichtung einen Befehl erhalten, die Hubeinrichtung 35a anzusteuern, sodass der Aktuator 71a und die mittels der Hubstange 69a gekoppelt zur Reinigungsscheibe 57a in das Filterelement 55a hineinbewegt. Die in dem Filterelement vorhandenen Rückstände werden aufgrund der Erhöhung der Strömungsgeschwindigkeit aus diesem herausgespült und in den oberen Gehäuseteil 51a des jeweiligen Gehäusesegments 23a transportiert. Sobald das Rückspülventil 37 angesteuert wird und der Ventilkörper 75a sich entgegen der durch das Rückstellelement 73a ausgeübten Rückstellkraft bewegt, wird der Durchflusskanal 79a in den Gehäusedeckeln 25a freigegeben, durch welchen die Rückstände in das Rückspülsystem 13 gelangen.

Zu Wartungszwecken kann der Gehäusedeckel 25a und somit auch die ihm zugeordneten Teile der Filter-Reinigungseinrichtung 11 mittels der Verbindungsmittel 33 einfach demontiert werden.

Die Funktionsweise der in den Fig. 1 bis 4 gezeigten, erfindungsgemäßen Vorrichtung 1 wird nachfolgend anhand eines praktischen Beispiels exemplarisch erläutert:

Beispielsweise wird in einem Kraftwerk hochbelastetes Kühlwasser durch Rohrleitungen zu einer solchen Vorrichtung geleitet. Die Rohrleitungen sind dabei mit dem Einlass 5 der Vorrichtung 1 fluiddicht verbunden. Das stark verschmutzte Kühlwasser strömt durch den Einlass 5 in das Gehäuse 3. Das Gehäuse 3 weist eine Mehrzahl von benachbart zueinander angeordneten Gehäusesegmenten 23a, 23b, 23c, 23d auf. In dem Gehäuse 3 verteilt sich das verschmutzte Kühlwasser auf die Gehäusesegmente 23a, 23b, 23c, 23d und strömt von unten in die Filterelemente ein, wird durch diese gereinigt und strömt durch den oberen Teil des Gehäuses 3 bevor es das Gehäuse durch den Auslass 7 wieder verlässt. Der Auslass 7 kann dabei mit einer Rohrleitung gekoppelt sein, welche das gereinigte Kühlwasser erneut dem Kühlkreislauf zuführt.

Sind die Filterelemente in dem Filtermodul 9 stark verschmutzt, werden diese durch die Filter-Reinigungseinrichtung 11 gereinigt. Dazu werden die Filterelemente mittels der Hubeinrichtung 35 in die Gehäusesegmente 23a, 23b, 23c, 23d bewegt und führen zu einer Erhöhung der Strömungsgeschwindigkeit durch den reduzierten Querschnitt innerhalb des Gehäuses. Das Rückspülventil 37 wird anschließend oder bevorzugt bereits durch Betätigung Hubeinrichtung 35 angesteuert, um das Gehäuse 3 bzw. die einzelnen Gehäusesegmente 23a, 23b, 23c, 23d mit dem Rückspülsystem 13 fluidleitend zu verbinden, sodass die Rückstände durch das Rückspülsystem 13 aus der Vorrichtung 1 entfernt werden.

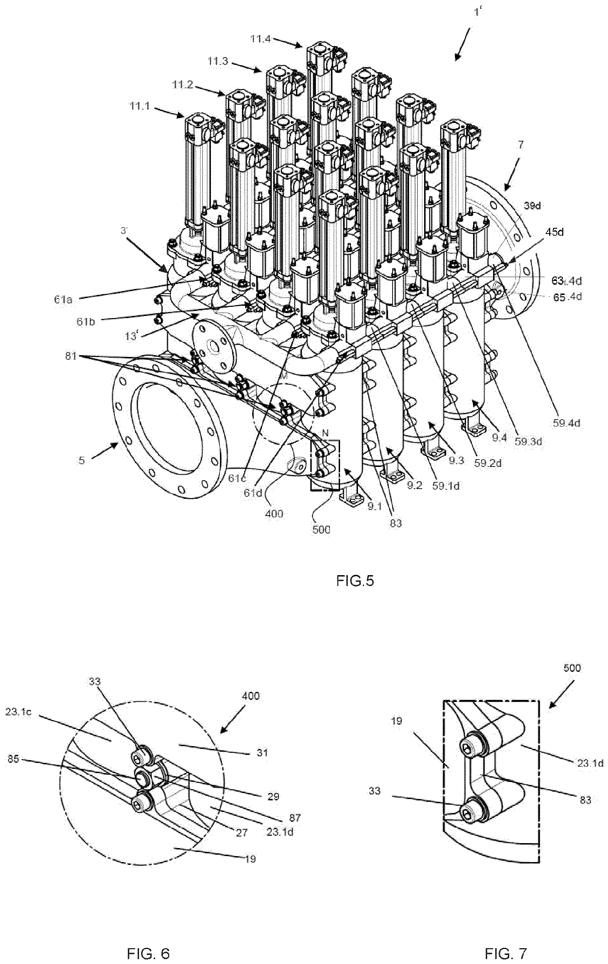

Fig. 5 zeigt eine perspektivische Ansicht einer Vorrichtung 1' zum Filtern eines Fluides gemäß einer zweiten bevorzugten Ausführungsform.

Die Vorrichtung 1' umfasst ein Gehäuse 3' sowie einen Einlass 5 zum Einlassen des zu filternden Fluides in das Gehäuse 3' und einen Auslass 7 zum Abgeben des gefilterten Fluides von dem Gehäuse 3`.

Das Gehäuse 3' umfasst vier benachbart zueinander, zwischen Einlass 5 und Auslass 7 angeordnete Filtermodule 9.1, 9.2, 9.3, 9.4, welche dazu eingerichtet sind, das eingelassene Fluid mittels Filterelementen zu filtern.

Die Vorrichtung 1' umfasst ferner vierFilter-Reinigungseinrichtungen 11.1, 11.2, 11.3, 11.4, welche jeweils einem Filtermodul 9.1, 9.2, 9.3, 9.4 zugeordnet, und dazu eingerichtet ist, das Filtermodul 9.1, 9.2, 9.3, 9.4 zu reinigen.

Das Gehäuse 3' ist ferner mit einem Rückspülsystem 13' verbunden, welches dazu eingerichtet ist, die Rückstände, welche mittels der Filter-Reinigungseinrichtungen 11.1, 11.2, 11.3, 11.4 aus den Filterelementen herausgelöst werden, wegzuleiten und abzugeben.

Der Einlass 5 umfasst einen Einlassflansch 15 (vgl. Fig. 1) zur Kopplung mit einer Rohrleitung und ein Rohrstück 17 (vgl. Fig. 1) zur Befestigung an dem Gehäuse 3`, insbesondere an einem einlassseitig angeordneten Filtermodul 9.1, der Vorrichtung 1'.

Der Auslass 7 umfasst einen Auslassflansch 19 (vgl. Fig. 1) zur Kopplung mit einer Rohrleitung zur Aufnahme des gefilterten Fluides und ein Rohrstück 21 (vgl. Fig. 1) zur Verbindung mit dem Gehäuse 3`, insbesondere einem auslassseitig angeordneten Filtermodul 9.4.

Das einlassseitig angeordnete Filtermodule 9.1 weist einen, aus den Fluideinlässen 49a, 49b, 49c, 49d (vgl. Fig. 2b) der einzelnen Gehäusesegmente gebildeten, gemeinsamen Fluideinlass 49 auf.

Das auslassseitig angeordnete Filtermodul 9.4 weist einen, aus den Fluidauslässen der einzelnen Gehäusesegmente gebildeten, gemeinsamen Fluidauslass 53 (vgl. Fig. 2a) auf.

Die nicht mit dem Einlass 5 oder Auslass 7 verbundenen Fluideinlässe 49 und Fluidauslässe 53 der Gehäusesegmente bilden eine Durchlassöffnung aus, durch welchen sich das einströmende Fluid in dem Gehäuse 3' verteilt und in die Filterelemente in den Gehäusesegmenten einströmt.

Die Filtermodule 9.1, 9.2, 9.3 und 9.4 sind mittels einer Filtermodul-Kopplungseinheit 81 miteinander gekoppelt.

Die Filtermodul-Kopplungseinheit 81 umfasst eine Mehrzahl an Filtermodul-Kopplungsmittel 85 (vgl. Fig. 6), welche hier als eine Stange mit endseitigem Außengewinde ausgebildet sind, und eine Mehrzahl an Fixierungsmitteln 87 (vgl. Fig. 6), welche hier als Muttern ausgebildet sind. Die Muttern 87 sind mit den Außengewinden der Kopplungsmittel 85 in Eingriff bringbar.

Die Gehäusesegmente weisen korrespondierend zu den Kopplungsmitteln 85 ausgebildete Aufnahmen 29 (vgl. Fig. 6) für die Kopplungsmittel 85 auf.

Die Filtermodule 9.1, 9.2, 9.3 und 9.4 werden mittels der Filtermodul-Kopplungsmittel 85 positioniert und in ihrer Position fixiert, wobei ferner Dichtungsmittel 83 zwischen den Filtermodulen 9.1, 9.2, 9.3 und 9.4 angeordnet sind, sodass die Filtermodulen 9.1, 9.2, 9.3 und 9.4 fluiddicht miteinander gekoppelt werden.

Die Gehäusesegmente eines Filtermoduls 9.1, 9.2, 9.3 und 9.4 sind parallel zueinander zwischen Einlass 5 und Auslass 7 angeordnet, und die Filtermodule 9.1, 9.2, 9.3 und 9.4 in einer Reihe zwischen Einlass 5 und Auslass 7 angeordnet, sodass das durch den Einlass 5 einströmende zu filternde Fluid sich auf die Filterelemente verteilt.

Die Filter-Reinigungseinrichtungen 11.1, 11.2, 11.3 und 11.4 zur Reinigung der Filtermodule 9.1, 9.2, 9.3 und 9.4 umfassen eine Mehrzahl an Filter-Reinigungselementen, wobei jeweils ein Filter- Reinigungselement dazu eingerichtet ist, eines der in den Gehäusesegmenten angeordneten Filterelemente zu reinigen.

Die Filter-Reinigungseinrichtungen 11.1, 11.2, 11.3 und 11.4 umfassen ferner eine zu der Zahl der Filter- Reinigungselemente korrespondierende Anzahl Hubeinrichtungen 35 (vgl. Fig. 1) zum Antreiben der Filter-Reinigungselemente. Die Gehäusesegmente 23 (vgl. Fig. 1) sind mittels eines steuerbaren Rückspülventils 37 (vgl. Fig. 1) mit dem Rückspülsystem 13' verbindbar und von diesem absperrbar.

Das Rückspülsystem 13' umfasst eine Mehrzahl von Rückspülrohren 39, welche mit einem Verbindungsrohr 41 (vgl. Fig. 1) gekoppelt sind. Das Verbindungsrohr 41 verbindet die Rückspülrohre 39 mit einem Rückspülauslass 43 (vgl. Fig. 1), welcher dazu eingerichtet ist, das stark verschmutzte Fluid aus dem Gehäuse 3' abzugeben. Die Rückspülrohre 39 sind endseitig mittels einer Rohrkappe 61 fluiddicht verschließbar.

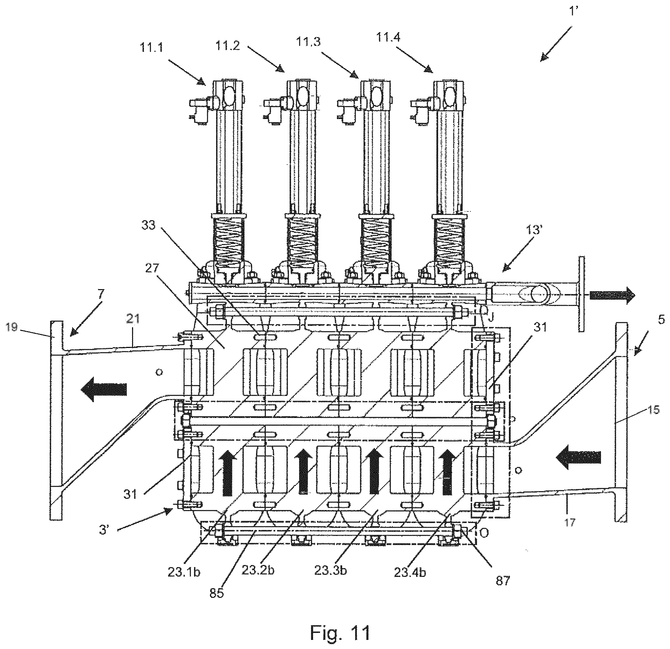

Die Rückspülrohre 39 umfassen eine Vielzahl an Rohrsegmenten 59.1d, 59.2d, 59.3d, 59.4d, welche jeweils einem Gehäusesegment 23 (vgl. Fig. 11) zugeordnet sind.

Die Rückspülrohre 39 umfassen jeweils mindestens ein Rohrsegment 59.1d, 59.2d, 59.3d, 59.4d welches jeweils einem Gehäusesegment 23 zugeordnet ist.

Jedes der Rohrsegmente 59.1d, 59.2d, 59.3d, 59.4d umfasst vorzugsweise einen absperrbaren Auslass, durch welchen das jeweilige Rohrsegment 59.1d, 59.2d, 59.3d, 59.4d und das Gehäusesegment 23 fluidleitend miteinander verbunden sind.

Mittels des Rückspülventils (nicht gezeigt) sind die Rohrsegmente 59.1d, 59.2d, 59.3d, 59.4d mit den Gehäusesegmenten 23 verbindbar und von diesen absperrbar.

Das Rückspülsystem 13' ist fluidleitend mit dem Gehäuse 3' verbunden und dazu eingerichtet die mittels der Filter-Reinigungseinrichtung 11 aus den Filterelementen der Filtermodule 9.1, 9.2, 9.3 und 9.4 entfernten Rückstände wegzuleiten und aus der Vorrichtung 1' zu entfernen.

Die Vorrichtung 1' umfasst ferner eine Rohr-Kopplungseinheit 45d mit einer Mehrzahl von Rohr-Manschetten, welche jeweils ein einzelnes Rohrsegment 59.1d, 59.2d, 59.3d, 59.4d umschließen und mit den Gehäusesegmenten 23.1b, 23.2b, 23.3b, 23.4b verbinden. Die Rohr-Manschette 63d ist dazu eingerichtet eine Kopplungsstangen 65d durchzuführen. Die Kopplungsstange 65d weist endseitig ein Eingriffsmittel (nicht gezeigt) auf, welche dazu eingerichtet sind, mit Kopplungsstangen benachbarter Rohrsegmente 59.1d, 59.2d, 59.3d, 59.4d eines Rückspülrohrs 39d in Eingriff gebracht zu werden. Somit kann eine Mehrzahl von Rohrsegmenten 59.1d, 59.2d, 59.3d, 59.4d zu einem Rückspülrohr 39d zusammengefasst werden.

Wie insbesondere Fig. 6 zeigt, sind die Kopplungsmittel 85 durch Aufnahmen 29, welche in den Stützstrukturen 27 der Gehäusesegmente 23 ausgebildet sind, durchführbar.

Oberhalb und unterhalb der Kopplungsmittel 85 mit den endseitigen Fixierungsmitteln 87 sind Schrauben 33 angeordnet, wobei die untere Schraube dazu eingerichtet ist, das Dichtungsteil 31 mit dem Gehäuse 3' zu verbinden und die unterhalb der Kopplungsmittel 85 und Fixierungsmittel 87 angeordneten Schrauben sind dazu eingerichtet, das Rohrstück 17 des Einlasses 5 mit dem Gehäuse 3' zu verbinden. In den Stützstrukturen 27 sind zu diesem Zweck Aussparungen vorgesehen, in welche die Schrauben 33 einbringbar und insbesondere mit diesen in Eingriff bringbar sind.

Wie insbesondere Fig. 7 zeigt, sind weitere Schrauben 33 zur Verbindung des Rohrstücks 17 mit dem Gehäuse 3' am Umfang der äußeren Gehäusesegmente 23.1c und 23.1d mit diesen in Eingriff bringbar.

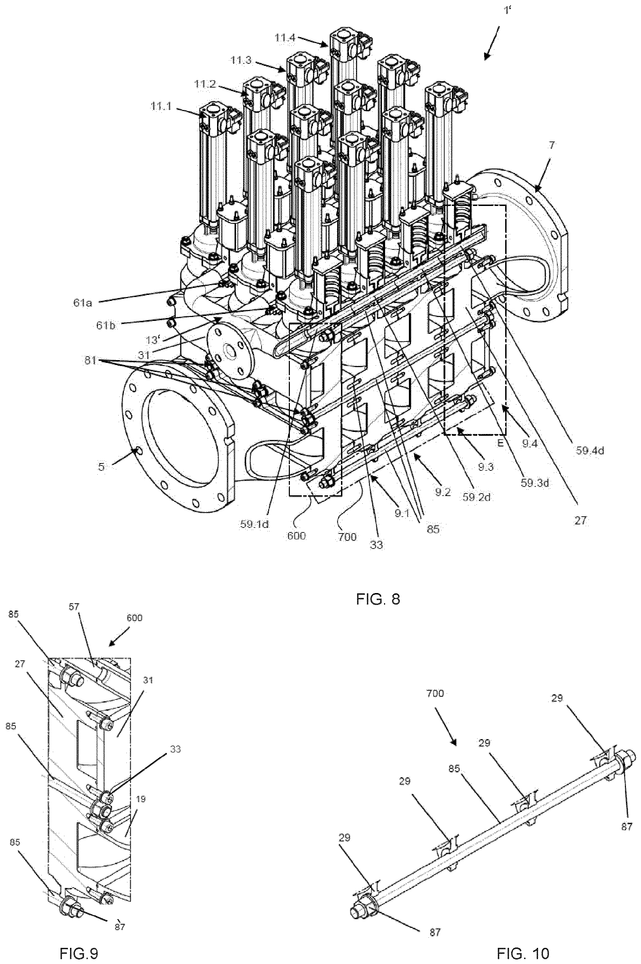

Fig. 8 zeigt eine Schnittdarstellung der Vorrichtung 1' gemäß Fig. 5 in einer perspektivischen Ansicht. Die Filtermodule 9.1, 9.2, 9.3, und 9.4, welche zwischen Einlass 5 und Auslass 7 angeordnet sind, sind mittels der Filtermodul-Kopplungseinheit 81 miteinander verbunden.

Die Filtermodul-Kopplungsmittel 85 werden dabei durch Aufnahmen 29 in den zwischen den Gehäusesegmenten 23 ausgebildeten Stützstrukturen 27 hindurchgeführt.

Dabei sind jeweils drei vertikal voneinander beabstandete Filtermodul-Kopplungsmittel 85 zwischen zwei benachbarten Gehäusesegmenten 23 eines Filtermoduls 9 angeordnet.

Oberhalb und unterhalb der Aufnahmen 29 sind Aussparungen, welche mit den Schrauben 33 in Eingriff bringbar sind, ausgebildet. Die Schrauben 33 sind dazu eingerichtet, die Dichtungsmittel 83, welche zwischen den Gehäusesegmenten 23 benachbarter, miteinander gekoppelter Gehäusesegmente 23 vorgesehen sind, mit den Gehäusesegmenten 23 zu verbinden.

Wie insbesondere Fig. 9 zeigt, sind die Aufnahmen 29 im Wesentlichen zylindrisch ausgebildet, sodass das als Stange mit kreisförmiger Querschnittsfläche ausgebildete Kopplungsmittel 85 hindurchgeführt werden kann. Die Aussparungen für die Schrauben 33 sind paarweise benachbart zu den Aufnahmen 29 angeordnet.

Wie insbesondere Fig. 10 zeigt, sind die endseitig angeordneten Fixierungsmittel 87, welche mit dem Kopplungsmittel 85 in Eingriff gebracht werden, selbstsichernde Muttern. In den Stützstrukturen 27 der Gehäusesegmente 23 sind ferner Gewinde ausgebildet, mit welchen Verbindungsmittel 33 zur Befestigung der Rohrstücke 17, 21 des Einlasses 5 und des Auslasses 7 sowie des Dichtungsteils 31 in Eingriff gebracht werden.

Fig. 11 zeigt eine Schnittdarstellung der erfindungsgemäßen Vorrichtung 1' zum Filtern eines Fluides.

Wie insbesondere dieser Schnittdarstellung zu entnehmen ist, sind der Einlass 5 mit dem Einlassflansch 15 und dem Rohrstück 17 (vgl. Fig. 1) und der Auslass 7 mit dem Auslassflansch 19 und dem Rohrstück 21 (vgl. Fig. 1) identisch ausgebildet. Die Querschnittsfläche am Einlassflansch 15 und insbesondere der Flächenmittelpunkt dieser Querschnittsfläche, ist vertikal beabstandet zu dem Flächenmittelpunkt der gehäuseseitigen Querschnittsfläche des Rohrstücks 17 ausgebildet. Das Rohrstück 17 ist somit in Richtung des Gehäuses 3' verjüngend ausgebildet. Gleiches gilt für das Rohrstück 21 des Auslasses 7.

Durch die asymmetrische Ausbildung des Einlasses 5 und des Auslasses 7 kann das zu filternde Fluid von einer vorgegebenen Höhe der Rohrleitung in den unteren Teil des Gehäuses 3' einfließen, sich in dem Gehäuse 3' verteilen und in die in dem oberen Gehäuseteil angeordneten Filterelemente einfließen. Durch den vertikalen Versatz arbeitet die erfindungsgemäße Vorrichtung somit "In-Line", das bedeutet, dass die Vorrichtung in ein bestehendes Rohrsystem, beispielsweise zwischen zwei beabstandeten Rohrstücken in derselben Höhe montiert werden kann.

Die Funktionsweise der in den Fig. 5 bis 11 gezeigten, erfindungsgemäßen Vorrichtung 1' wird nachfolgend anhand eines praktischen Beispiels exemplarisch erläutert:

Beispielsweise wird in einem Kraftwerk hochbelastetes Kühlwasser durch Rohrleitungen zu einer solchen Vorrichtung geleitet. Die Rohrleitungen sind dabei mit dem Einlass 5 der Vorrichtung 1' fluiddicht verbunden. Das stark verschmutzte Kühlwasser strömt durch den Einlass 5 in das Gehäuse 3`. Das Gehäuse 3' weist eine Mehrzahl von, vorzugsweise benachbart zueinander angeordneten, Gehäusesegmenten 23 auf. In dem Gehäuse 3' strömt das verschmutzte Kühlwasser in mindestens ein Filterelement, welches jeweils zumindest teilweise innerhalb eines Gehäusesegments 23 des Gehäuses 3' angeordnet ist. Die Gehäusesegmente 23, in welchen jeweils ein Filterelement angeordnet ist, bilden zusammen ein erstes Filtermodul 9.1 aus. Ein solches Filtermodul 9 kann aus beliebig vielen Gehäusesegmenten einschließlich in diesen angeordneten Filterelementen zusammengesetzt sein. Das verschmutzte Kühlwasser kann dabei mehrere in Reihe geschaltete Filtermodule 9.1, 9.2, 9.3 und 9.4 durchströmen und in diesen gereinigt werden, bevor es das Gehäuse 3' durch den Auslass 7 wieder verlässt. Der Auslass 7 kann dabei mit einer Rohrleitung gekoppelt sein, welche das gereinigte Kühlwasser erneut dem Kühlkreislauf zuführt.

Sind die Filterelemente der Filtermodule 9.1, 9.2, 9.3 und 9.4 zu stark verschmutzt, ist jedem der Filtermodule jeweils eine Filter-Reinigungseinrichtung 11.1, 11.2, 11.3 und 11.4 zugeordnet, welche die in den Gehäusesegmenten 23 angeordneten Filterelemente reinigt.

Die Erfindung wird ferner beschrieben anhand der nachfolgenden Ausführungsbeispiele, worin:
Ausführungsbespiel 1. Vorrichtung (1, 1') zum Filtern eines Fluides, insbesondere Bernoulli-Filter-Vorrichtung (1, 1'), umfassend
   - ein Gehäuse (3, 3'),
   - eine Mehrzahl in dem Gehäuse (3, 3') angeordnete Filterelemente (55) zum Filtern des Fluides,
   - einen Einlass (5) zum Einlassen des zu filternden Fluides in das Gehäuse (3, 3'), und
   - einen Auslass (7) zum Abgeben des gefilterten Fluides von dem Gehäuse (3, 3'), dadurch gekennzeichnet, dass das Gehäuse (3, 3') eine Mehrzahl von Gehäusesegmenten (23) aufweist, welche mit benachbarten Gehäusesegmenten (23) verbindbar sind, und
      dass jeweils ein Filterelement (55) mindestens teilweise innerhalb eines Gehäusesegments (23) angeordnet ist, und
      dass die Gehäusesegmente (23) und Filterelemente (55) zusammen ein modular zusammengesetztes Filtermodul (9) bilden.
Ausführungsbespiel 2. Vorrichtung (1, 1') nach Ausführungsbeispiel 1,
   dadurch gekennzeichnet, dass mehrere Filtermodule (9) benachbart zueinander, in Reihe geschaltet angeordnet sind und jeweils ein Filtermodul (9) fluidleitend mit mindestens einem benachbarten Filtermodul (9) verbindbar ist.
Ausführungsbespiel 3. Vorrichtung (1, 1') nach einem der vorstehenden Ausführungsbeispiele,
   dadurch gekennzeichnet, dass mehrere Filtermodule (9) in einer Reihe derart zwischen Einlass (5) und Auslass (7) angeordnet sind, dass die Gehäusesegmente (23) der Filtermodule (9) batterieartig angeordnet sind, wobei die Gehäusesegmente (23) im Wesentlichen gleich oder identisch gestaltet sind.
Ausführungsbespiel 4. Vorrichtung (1, 1') nach einem der vorstehenden Ausführungsbeispiele,
   dadurch gekennzeichnet, dass die Gehäusesegmente (23) jeweils mindestens einen Fluideinlass (49) zum Einlass en des zu filternden Fluides und mindestens einen Fluidauslass (53) zum Abgeben des gefilterten Fluides aufweisen,
   wobei die Fluideinlässe (49) fluidleitend mit jeweils einem Fluidauslass (53) eines benachbarten Filtermoduls (9) oder dem Auslass (7) verbindbar sind, und
   dass die Fluideinlässe (49) fluidleitend mit jeweils einem Fluideinlass (49) eines benachbarten Filtermoduls (9) oder dem Einlass (5) verbindbar sind, und/oder mindestens eine Durchlassöffnung aufweisen, welche dazu eingerichtet ist, das zu filternde Fluid in dem Filtermodul (9) zu verteilen.
Ausführungsbespiel 5. Vorrichtung (1, 1') nach Ausführungsbeispiel 4,
   gekennzeichnet durch mindestens ein Dichtungsteil (31) zur endseitigen Abdichtung der Gehäusesegmente (23) eines einlassseitig und/oder auslassseitig angeordneten Filtermoduls (9),
   wobei das Dichtungsteil (31) dazu eingerichtet ist, jeweils den Fluideinlass (49) oder den Fluidauslass (53) eines Gehäusesegments (23) abzudichten.
Ausführungsbespiel 6. Vorrichtung (1, 1') nach mindestens einem der vorstehenden Ausführungsbeispiele,
   gekennzeichnet durch eine Filtermodul-Kopplungseinheit (81) zur Fixierung und Kopplung von zwei oder mehr Filtermodulen (9), mit
   - mindestens einem Kopplungsmittel (85), welches dazu eingerichtet ist, benachbart zueinander angeordnete Filtermodule (9) miteinander zu koppeln, und
   - mindestens einem dem Kopplungsmittel (85) zugeordneten Fixierungsmittel, welches dazu eingerichtet ist, die benachbart zueinander angeordneten Filtermodule (9) in ihrer Position zu fixieren.
Ausführungsbespiel 7. Vorrichtung (1, 1') nach Ausführungsbeispiel 6,
   dadurch gekennzeichnet, dass jedem Gehäusesegment (23) mindestens ein Kopplungsmittel, vorzugsweise jeweils drei vertikal beabstandete Kopplungsmittel (85) zugeordnet sind, welche endseitig mit den Fixierungsmitteln (85) in Eingriff bringbar sind, wobei vorzugsweise die Kopplungsmittel (85) als Stangen ausgebildet sind, und
   wobei die Gehäusesegmente (23) korrespondierend zu den Kopplungsmitteln ausgebildete Aufnahme für die Kopplungsmittel (85) aufweisen, welche vorzugsweise als Aufnahmen zum Hindurchführen der Stangen ausgebildet sind.
Ausführungsbespiel 8. Vorrichtung (1, 1') nach einem der vorstehenden Ausführungsbeispiele,
   dadurch gekennzeichnet, dass der Einlass (5) einen Einlassflansch (15) zur Verbindung mit einer Rohrleitung und ein einlassseitiges Rohrstück (17) zur Verbindung mit dem Gehäuse (3, 3') umfasst, und
   dass der Auslass (7) einen Auslassflansch (19) zur Verbindung mit einer Rohrleitung und ein auslassseitiges Rohrstück (21) zur Verbindung mit dem Gehäuse (3, 3') umfasst, wobei die Rohrstücke (17, 21) jeweils eine erste filtermodulseitige Querschnittsfläche und eine zweite flanschseitige Querschnittsfläche aufweisen, und
   der Mittelpunkt der flanschseitigen Querschnittsfläche vertikal und/oder horizontal beabstandet zu dem Mittelpunkt der filtermodulseitigen Querschnittsfläche angeordnet ist. Ausführungsbespiel 9. Vorrichtung (1, 1') nach Ausführungsbeispiel 8,
   dadurch gekennzeichnet, dass der Abstand des Mittelpunktes der flanschseitigen Querschnittsfläche und der filtermodulseitigen Querschnittsfläche in vertikaler und/oder horizontaler Richtung durch eine Rotation um eine horizontale Achse veränderbar ist.
Ausführungsbespiel 10. Vorrichtung (1, 1') nach einem der vorstehenden Ausführungsbeispiele,
   gekennzeichnet durch eine Filter-Reinigungseinrichtung (11) zu Reinigung der Filterelemente (55) von Rückständen des gefilterten Fluides, mit
      - mindestens einem bewegbar gelagerten Filter-Reinigungselement, welches korrespondierend zu jeweils einem Filterelement (55) ausgebildet und dazu eingerichtet ist, das Filterelement (55) von Rückständen des gefilterten Fluides zu reinigen,
      - einem mit den Filterelementen fluidleitend verbundenen Rückspülsystem (13, 13'), zur Leitung und Abgabe der Rückstände des gefilterten Fluides, und
      - einem Verbindungsmittel (35) mit einem Aktuator (71) und einer mit dem Filter-Reinigungselement (57) gekoppelten Hubstange (69),
   wobei eine Hubeinrichtung (35) dazu eingerichtet ist, das Filter-Reinigungselement (57) so in das Filterelement (55) mittels der Hubstange (69) einzuführen, dass zwischen einer inneren Wand des Filterelements (55) und dem Filter-Reinigungselement (57) ein Reinigungsspalt gebildet wird, sodass lokal eine Strömungsgeschwindigkeit der zu filternden Flüssigkeit erhöht und dabei in dem Filterelement (55) befindliche Stoffe abgespült werden.
Ausführungsbespiel 11. Vorrichtung (1, 1') nach Ausführungsbeispiel 10,
   dadurch gekennzeichnet, dass das Rückspülsystem (13, 13') ferner umfasst:
      - einen Rückspülauslass (43) zum Abgeben der Rückstände des gefilterten Fluides,
      - eine Vielzahl von Rückspülrohren (39) zur fluidleitenden Verbindung benachbarter Filtermodule (9),
   wobei die Rückspülrohre (39) beabstandet und im Wesentlichen parallel zueinander angeordnet sind und jeweils mindestens ein absperrbares Rohrsegment (59) aufweisen, welches mit einem Gehäusesegment (23) der Filtermodule (9) verbunden ist,
      - ein Verbindungsrohr (41) zum fluidleitenden Verbinden der Rückspülrohre (39) miteinander und mit dem Rückspülauslass.
Ausführungsbespiel 12. Vorrichtung (1, 1') nach dem Oberbegriff von Ausführungsbeispiel 1 oder einem der vorstehenden Ausführungsbeispiele, ferner umfassend
   - mindestens einen Gehäusedeckel (25) zum Verschließen des Gehäuses,
   - mindestens eine Filter-Reinigungseinrichtung (11) zur Reinigung des Filterelements (55) von Rückständen des gefilterten Fluides, und
   - mindestens ein mit dem Filterelement (55) fluidleitend verbundenes Rückspülsystem (13, 13'), zur Leitung und Abgabe der Rückstände des gefilterten Fluides,
   dadurch gekennzeichnet, dass die Filter-Reinigungseinrichtung (11) dem Gehäusedeckel (25) zugeordnet und insbesondere an diesem befestigt ist, und das Rückspülsystem (13, 13') dem Gehäuse (3, 3'), insbesondere Gehäusesegmenten (23) zugeordnet ist.
Ausführungsbespiel 13. Vorrichtung (1, 1') nach Ausführungsbeispiel 12,
   dadurch gekennzeichnet, dass die Filter-Reinigungseinrichtung (11) ferner umfasst:
      - ein in den Gehäusedeckel (25) integriertes Filter-Reinigungselement (57),
   wobei das Filter-Reinigungselement (57) in das Filterelement (55) einführbar und dazu eingerichtet ist, das Filterelement (55) von Rückständen des gefilterten Fluides zu reinigen.
Ausführungsbespiel 14. Vorrichtung (1, 1') nach Ausführungsbeispiel 13,
   dadurch gekennzeichnet, dass die Filter-Reinigungseinrichtung (11) ferner umfasst:
      - eine Hubeinrichtung (35) mit einem Aktuator (71) und einer mit dem Filter-Reinigungselement (57) gekoppelten Hubstange (69),
   wobei die Hubeinrichtung (35) dazu eingerichtet ist, das Filter-Reinigungselement (57) so in das Filterelement (55) mittels der Hubstange (69) einzuführen, dass zwischen einer inneren Wand des Filterelements (55) und dem Filter-Reinigungselement (57) ein Reinigungsspalt gebildet wird, sodass lokal eine Strömungsgeschwindigkeit der zu filternden Flüssigkeit erhöht und dabei in dem Filterelement (55) befindliche Stoffe abgespült werden, und
   wobei die Hubeinrichtung (35) dem Gehäusedeckel (25) zugeordnet und insbesondere der Aktuator (71) mit dem Gehäusedeckel (25) fest verbunden ist, und in dem Gehäusedeckel (25) eine Öffnung zur Durchführung der Hubstange (69) ausgebildet ist.
Ausführungsbespiel 15. Vorrichtung (1, 1') nach Ausführungsbeispiel 13 oder 14,
   dadurch gekennzeichnet, dass das Rückspülsystem (13, 13') ferner eine Vielzahl von Rückspülrohren zur fluidleitenden Verbindung benachbarter Filtermodule (9) umfasst,
   wobei die Rückspülrohre (39) jeweils mindestens ein Rohrsegment (59) mit einem absperrbaren Auslass (7) aufweisen, welches fluidleitend mit dem Filterelement (55) verbunden ist, und
   wobei in dem Gehäusedeckel (25) ein Rückspülventil (37) integriert ist, welches dazu eingerichtet ist, die Rückspülrohre (39) zumindest abschnittsweise abzusperren.
Ausführungsbespiel 16. Vorrichtung (1, 1') nach Ausführungsbeispiel 15,
   dadurch gekennzeichnet, dass das Rückspülventil (37) ein Ventilgehäuse (74) aufweist, welches durch den Gehäusedeckel (25) ausgebildet wird, und
   dass an dem Ventilgehäuse (74) ein Ventilkörper (73) bewegbar gelagert ist, welcher mit einem Ventilsitz (77) in Anlage bringbar ist, um das Ventil zu schließen,
   wobei in dem Gehäusedeckel (25) ein Durchflusskanal ausgebildet ist, welcher dazu eingerichtet ist, das Filterelement (55) fluidleitend mit dem Rückspülrohr (39) zu verbinden, und der Ventilkörper (73) den Durchflusskanal versperrt, wenn das Ventil geschlossen ist.
Ausführungsbespiel 17. Vorrichtung (1, 1') nach Ausführungsbeispiel 15 oder 16,
   dadurch gekennzeichnet, dass der Ventilsitz (77) als eine Blende ausgebildet ist, welche dazu eingerichtet ist, die Strömungsgeschwindigkeit des Volumenstroms zu verändern, welcher in das Rückspülrohr (39) einfließt.

### Bezugszeichenliste:

- 1: Vorrichtung (1, 1')
- 3: Gehäuse (3, 3')
- 5: Einlass
- 7: Auslass
- 9: Filtermodul (9.1, 9.2, 9.3, 9.4)
- 11: Filter-Reinigungseinrichtung (11.1, 11.2, 11.3, 11.4)
- 13: Rückspülsystem (13, 13`)
- 15: Einlassflansch
- 17: Rohrstück
- 19: Auslassflansch
- 21: Rohrstück
- 23: Gehäusesegment (23a, 23b, 23c, 23d; 23.1c, 23.1d, 23.1b, 23.2b, 23.3b, 23.4b)
- 25: Gehäusedeckel (25a, 25b, 25c, 25d)
- 27: Stützstruktur
- 29: Aufnahmen
- 31: Dichtungsteil
- 33: Schraube
- 35: Hubeinrichtung (35a, 35b, 35c, 35d)
- 37: Rückspülventil (37a, 37b, 37c, 37d)
- 39: Rückspülrohr (39d)
- 41: Verbindungsrohr
- 43: Rückspülauslass
- 45: Rohr-Kopplungseinheit (45d)
- 47: unteres Gehäuseteil (47a, 47b, 47c, 47d)
- 49: Fluideinlass (49a, 49b, 49c, 49d)
- 51: oberes Gehäuseteil (51a, 51b, 51c, 51d)
- 53: Fluidauslass
- 55: Filterelement (55a, 55b, 55c, 55d)
- 57: Filter-Reinigungselemente (57a)
- 59: Rohrsegment (59d; 59.1d, 59.2d, 59.3d, 59.4d)
- 61: Rohrkappe (61d)
- 63: Rohr-Manschette (63d)
- 65: Kopplungsstange (65d)
- 67: Eingriffsmittel
- 69: Hubstange (69a, 69b, 69c, 69d)
- 71: Aktuator (71a, 71b, 71c, 71d)
- 73: Rückstellelement (73a, 73b, 73c, 73d)
- 74: Ventilgehäuse
- 75: Ventilkörper (75a, 75b, 75c, 75d)
- 77: Ventilsitz (77a, 77b, 77c, 77d)
- 79: Durchflusskanal (79a, 79b, 79c, 79d)
- 81: Filtermodul-Kopplungseinheit
- 83: Dichtungsmittel
- 85: Filtermodul-Kopplungsmittel
- 87: Fixierungsmittel

## Patentansprüche

1. Vorrichtung (1, 1') zum Filtern eines Fluides, insbesondere Bernoulli-Filter-Vorrichtung (1, 1'), umfassend
- ein Gehäuse (3, 3'),
- mindestens einem in dem Gehäuse (3, 3') angeordnete(n) Filterelement (55) zum Filtern des Fluides,
- einen Einlass (5) zum Einlassen des zu filternden Fluides in das Gehäuse (3, 3'), und
- einen Auslass (7) zum Abgeben des gefilterten Fluides von dem Gehäuse (3, 3'),
- mindestens einen Gehäusedeckel (25) zum Verschließen des Gehäuses,
- mindestens eine Filter-Reinigungseinrichtung (11) zur Reinigung des Filterelements (55) von Rückständen des gefilterten Fluides, mit mindestens einem bewegbar gelagerten Filter-Reinigungselement (57), welches korrespondierend zu dem Filterelement (55) ausgebildet und dazu eingerichtet ist, das Filterelement (55) von Rückständen des gefilterten Fluides zu reinigen, und ferner einem mit dem Filterelement (55) fluidleitend verbundenen Rückspülsystem (13, 13') zur Leitung und Abgabe der Rückstände des gefilterten Fluides,
**dadurch gekennzeichnet, dass** die Filter-Reinigungseinrichtung (11) dem Gehäusedeckel (25) zugeordnet und insbesondere an diesem befestigt ist, und das Rückspülsystem (13, 13') dem Gehäuse (3, 3') zugeordnet ist.

2. Vorrichtung (1, 1') nach Anspruch 1,
**dadurch gekennzeichnet, dass** die Filter-Reinigungseinrichtung (11) an dem Gehäusedeckel (25) befestigt ist.

3. Vorrichtung (1, 1') nach Anspruch 1 oder 2,
**dadurch gekennzeichnet, dass** der Einlass (5) einen Einlassflansch (15) zur Verbindung mit einer Rohrleitung und ein einlassseitiges Rohrstück (17) zur Verbindung mit dem Gehäuse (3, 3') umfasst, und
dass der Auslass (7) einen Auslassflansch (19) zur Verbindung mit einer Rohrleitung und ein auslassseitiges Rohrstück (21) zur Verbindung mit dem Gehäuse (3, 3') umfasst, wobei die Rohrstücke (17, 21) jeweils eine erste filtermodulseitige Querschnittsfläche und eine zweite flanschseitige Querschnittsfläche aufweisen, und
der Mittelpunkt der flanschseitigen Querschnittsfläche vertikal und/oder horizontal beabstandet zu dem Mittelpunkt der filtermodulseitigen Querschnittsfläche angeordnet ist.

4. Vorrichtung (1, 1') nach Anspruch 3,
**dadurch gekennzeichnet, dass** der Abstand des Mittelpunktes der flanschseitigen Querschnittsfläche und der filtermodulseitigen Querschnittsfläche in vertikaler und/oder horizontaler Richtung durch eine Rotation um eine horizontale Achse veränderbar ist.

5. Vorrichtung (1, 1') nach einem der vorstehenden Ansprüche,
**gekennzeichnet durch** eine Hubeinrichtung (35) mit einem Aktuator (71) und einer mit dem Filter-Reinigungselement gekoppelten Hubstange (69), wobei die Hubeinrichtung (35) dazu eingerichtet ist, das Filter-Reinigungselement (57) so in das Filterelement (55) mittels der Hubstange (69) einzuführen, dass zwischen einer inneren Wand des Filterelements (55) und dem Filter-Reinigungselement (57) ein Reinigungsspalt gebildet wird, sodass lokal eine Strömungsgeschwindigkeit der zu filternden Flüssigkeit erhöht und dabei in dem Filterelement (55) befindliche Stoffe abgespült werden.

6. Vorrichtung (1, 1') nach einem der vorstehenden Ansprüche,
**dadurch gekennzeichnet, dass** das Rückspülsystem (13, 13') ferner umfasst:
- einen Rückspülauslass (43) zum Abgeben der Rückstände des gefilterten Fluides,
- eine Vielzahl von Rückspülrohren (39) zur fluidleitenden Verbindung benachbarter Filtermodule (9),
- ein Verbindungsrohr (41) zum fluidleitenden Verbinden der Rückspülrohre (39) miteinander und mit dem Rückspülauslass6. Vorrichtung (1, 1') nach einem der vorstehenden Ansprüche,
**dadurch gekennzeichnet, dass** die Rückspülrohre (39) beabstandet und im Wesentlichen parallel zueinander angeordnet sind und jeweils mindestens ein absperrbares Rohrsegment (59) aufweisen, welches mit einem Gehäusesegment (23) der Filtermodule (9) verbunden ist.

7. Vorrichtung (1, 1') nach einem der vorstehenden Ansprüche,
**dadurch gekennzeichnet, dass** das Rückspülsystem eine bzw. die Vielzahl von Rückspülrohren zur fluidleitenden Verbindung benachbarter Filtermodule (9) umfasst,
wobei die Rückspülrohre (39) jeweils mindestens ein bzw. das Rohrsegment (59) mit einem absperrbaren Auslass (7) aufweisen, welcher fluidleitend mit dem Filterelement (55) verbunden ist, und
wobei in dem Gehäusedeckel (25) ein Rückspülventil (37) integriert ist, welches dazu eingerichtet ist, die Rückspülrohre (39) zumindest abschnittsweise abzusperren.

8. Vorrichtung (1, 1') nach einem der vorstehenden Ansprüche,
**dadurch gekennzeichnet, dass** das Filter-Reinigungselement (57) in das Filterelement (55) einführbar und dazu eingerichtet ist, das Filterelement (55) von Rückständen des gefilterten Fluides zu reinigen.

9. Vorrichtung (1, 1') nach einem der Ansprüche 5 bis 8,
**dadurch gekennzeichnet, dass** die Hubeinrichtung (35) dem Gehäusedeckel (25) zugeordnet und insbesondere der Aktuator (71) mit dem Gehäusedeckel (25) fest verbunden ist, und
in dem Gehäusedeckel (25) eine Öffnung zur Durchführung der Hubstange (69) ausgebildet ist.

10. Vorrichtung (1, 1') nach einem der vorstehenden Ansprüche,
**dadurch gekennzeichnet, dass** das Rückspülventil (37) ein Ventilgehäuse (74) aufweist, welches durch den Gehäusedeckel (25) ausgebildet wird, und
dass an dem Ventilgehäuse (74) ein Ventilkörper (73) bewegbar gelagert ist, welcher mit einem Ventilsitz (77) in Anlage bringbar ist, um das Ventil zu schließen,

11. Vorrichtung (1, 1') nach einem der vorstehenden Ansprüche
**dadurch gekennzeichnet, dass** das Rückspülventil mit einem Rückstellelement gekoppelt, welches in dem Gehäusedeckel angeordnet und dazu eingerichtet ist, eine Rückstellkraft auf den Ventilkörper aufzubringen, um den Ventilkörper in Anlage mit dem Ventilsitz zu halten

12. Vorrichtung (1, 1') nach einem der vorstehenden Ansprüche
**dadurch gekennzeichnet, dass** in dem Gehäusedeckel (25) ein Durchflusskanal ausgebildet ist, welcher dazu eingerichtet ist, das Filterelement (55) fluidleitend mit dem Rückspülrohr (39) zu verbinden, und der Ventilkörper (73) den Durchflusskanal versperrt, wenn das Ventil geschlossen ist.

13. Vorrichtung (1, 1') nach einem der vorstehenden Ansprüche,
**dadurch gekennzeichnet, dass** der Ventilsitz (77) als eine Blende ausgebildet ist, welche dazu eingerichtet ist, die Strömungsgeschwindigkeit des Volumenstroms zu verändern, welcher in das Rückspülrohr (39) einfließt.

14. Vorrichtung (1, 1') nach einem der vorstehenden Ansprüche,
**dadurch gekennzeichnet, dass** das Gehäuse (3, 3') eine Mehrzahl von Gehäusesegmenten (23) aufweist, welche mit benachbarten Gehäusesegmenten (23) verbindbar sind, und dass jeweils ein Filterelement (55) mindestens teilweise innerhalb eines Gehäusesegments (23) angeordnet ist, wobei die Gehäusesegmente (23) und Filterelemente (55) zusammen ein modular zusammengesetztes Filtermodul (9) bilden,
wobei vorzugsweise
mehrere Filtermodule (9) benachbart zueinander, in Reihe geschaltet angeordnet sind und jeweils ein Filtermodul (9) fluidleitend mit mindestens einem benachbarten Filtermodul (9) verbindbar ist, und/oder
mehrere Filtermodule (9) in einer Reihe derart zwischen Einlass (5) und Auslass (7) angeordnet sind, dass die Gehäusesegmente (23) der Filtermodule (9) batterieartig angeordnet sind, wobei die Gehäusesegmente (23) im Wesentlichen gleich oder identisch gestaltet sind, und/oder
die Gehäusesegmente (23) jeweils mindestens einen Fluideinlass (49) zum Einlassen des zu filternden Fluides und mindestens einen Fluidauslass (53) zum Abgeben des gefilterten Fluides aufweisen, wobei die Fluideinlässe (49) fluidleitend mit jeweils einem Fluidauslass (53) eines benachbarten Filtermoduls (9) oder dem Auslass (7) verbindbar sind, und die Fluideinlässe (49) fluidleitend mit jeweils einem Fluideinlass (49) eines benachbarten Filtermoduls (9) oder dem Einlass (5) verbindbar sind, und/oder mindestens eine Durchlassöffnung aufweisen, welche dazu eingerichtet ist, das zu filternde Fluid in dem Filtermodul (9) zu verteilen.

15. Vorrichtung (1, 1') nach Anspruch 15,
**dadurch gekennzeichnet, dass** das Rückspülsystem (13, 13') dem Gehäuse (3, 3'), insbesondere Gehäusesegmenten (23) zugeordnet ist
